(19) Europäisches Patentamt
European Patent Office
Office européen des brevets

(11) EP 3 947 545 B1

(12) **EUROPEAN PATENT SPECIFICATION**

(45) Date of publication and mention of the grant of the patent:
**12.03.2025 Bulletin 2025/11**

(21) Application number: **20720237.5**

(22) Date of filing: **25.03.2020**

(51) International Patent Classification (IPC):
***C08L 1/14*** $^{(2006.01)}$ ***G02B 5/30*** $^{(2006.01)}$

(52) Cooperative Patent Classification (CPC):
**C08L 1/14; G02B 5/305**

(86) International application number:
**PCT/US2020/024561**

(87) International publication number:
**WO 2020/205347 (08.10.2020 Gazette 2020/41)**

(54) **HMI DISPLAY COVERS HAVING LOW BIREFRINGENCE MADE FROM LOW HYDROXYL CELLULOSE ESTERS**

HMI-DISPLAY-ABDECKUNGEN MIT NIEDRIGER BIREFRINGENZ AUS ZELLULOSE-ESTERN MIT GERINGER HYDRXYLSUBSITUTION

COUVERCLES D’AFFICHAGE IHM AYANT UNE FAIBLE BIRÉFRINGENCE FAITE À PARTIR D’ESTERS DE FAIBLE HYDROXYLE CELLULOSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 US 201962826068 P**

(43) Date of publication of application:
**09.02.2022 Bulletin 2022/06**

(73) Proprietor: **Eastman Chemical Company**
**Kingsport, TN 37660 (US)**

(72) Inventors:
- **SHELBY, Marcus, David**
  **Fall Branch, TN 37656 (US)**
- **WEAVER, Laura, Bauerle**
  **Johnson City, TN 37615 (US)**
- **PECORINI, Thomas, Joseph**
  **Kingsport, TN 37663 (US)**
- **ARMSTRONG, Michael, Gage**
  **Johnson City, TN 37604 (US)**
- **CARICO, Douglas, Weldon, Jr.**
  **Kingsport, TN 37663 (US)**
- **MAINE, James, Collins**
  **Church Hill, TN 37642 (US)**

(74) Representative: **Ricker, Mathias**
**Wallinger Ricker Schlotter Tostmann**
**Patent- und Rechtsanwälte Partnerschaft mbB**
**Zweibrückenstraße 5-7**
**80331 München (DE)**

(56) References cited:
**EP-A2- 0 822 201**
**WO-A1-2019/055267**
**WO-A1-92/05213**
**WO-A2-2017/156364**
**US-A1- 2009 050 842**
**US-A1- 2015 168 608**
**US-A1- 2017 259 530**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

This invention relates generally to optically clear panels, such as Human Machine Interface touch displays; in particular, it relates to certain plastic touch plate covers made from low hydroxyl cellulose esters.

### Background of the Invention

Human Machine Interface (HMI) displays are becoming more prevalent in automobiles as they provide passengers with more control over the interior via a single interface. For example, the entertainment system, air conditioner, lighting, *etc.,* can all be controlled by this single touch panel display via multiple selection options. HMI displays normally include an optical module of some sort (*e.g.,* LCD panel, OLED, *etc.*) along with a protective, optically clear "touch plate" on the surface. The touch plate is required to be both scratch resistant (given the frequent physical contact), as well as having very low optical birefringence to minimize optical shadowing.

Glass meets these criteria and is the current material of choice but is still considered lacking because it adds extra weight and has poor impact resistance (which could lead to risk of injury during a crash). Automakers would also like to have greater design flexibility in the auto interior, including larger and more highly curved/contoured HMI panels. Such designs are simply not practical with glass, and so other options are needed.

There has been a desire to replace glass with plastic as it can be molded into different shapes more easily, while also offering better impact strength. However, molded plastics tend to have residual orientation and stress that leads to optical birefringence in the panel. This birefringence can in turn lead to undesirable optical defects, most noticeably "shadowing". Shadowing occurs, for example, whenever a driver views the HMI display wearing polarized sunglasses. The polarized lenses impart additional gradations in color and/or brightness in the panel that can make the panel appear "mottled". The only way to eliminate this shadowing currently is to use very low birefringence materials such as glass as the touch plate material.

It is also important that the low birefringence and optical clarity be maintained, without sacrificing impact strength. Some polymers such as acrylics, for example poly(methyl methacrylate) (PMMA) can be molded with sufficiently low birefringence, but such materials are inherently brittle and therefore not acceptable from a safety or reliability standpoint.

### Summary of the Invention

The invention is directed to an optically clear protective cover or cover plate for Human Machine Interface (HMI) touch panel displays wherein the cover plate is formed from melt processable cellulose ester having a low hydroxyl content and to methods for their manufacture. The thickness of the cover sheet is about 2 mm to about 5 mm. The total degree of substitution (DS) of the cellulose ester ranges from 2.85 to 3 wherein a DS of 0 represents no esters side groups (i.e. pure cellulose) and a DS of 3 represents the fully esterified cellulose ester. In embodiments, the DS is in the range of from 2.9 to 2.97. It has been discovered that cellulose esters having a DS as described herein can provide panels having essentially "zero birefringent" behavior. In embodiments, the acyl groups can be chosen from acetyl, propionyl and butyrl or combinations thereof. Cellulose esters substituted with such groups can maintain higher glass transition temperature. It is also contemplated that longer chain acyl groups can be included, particularly at lower levels.

In embodiments, the Human Machine Interface covers of the invention have a very low optical retardation wherein all parts of the optical panel within the viewable area have an in-plane optical retardation Re, ranging from -100nm to 100nm and a thickness retardation Rth that is also in the range of -100nm to 100nm. Such a low retardation panel does not require any additional compensation films.

In another embodiment, all parts of the optical panel within the viewable area have an in-plane optical retardation Re, ranging from - 80nm to 80nm and a thickness retardation Rth that is in the range of - 100nm to 100nm.

In another embodiment, all parts of the optical panel within the viewable area have an in-plane optical retardation Re, ranging from - 50nm to 50nm and a thickness retardation Rth that is in the range of - 100nm to 100nm.

In embodiments, the cover plate may further comprise one or more compensation layers to provide a cover plate assembly, where the compensation layer(s) can provide the cover plate assembly with a total optical retardation that falls within an acceptable range for an HMI cover application. In embodiments, the cover plate assembly exhibits a total optical retardation that is in a range chosen from: (i) from -100 to 100 nm, (ii) from 100 to 300 nm, or (iii) from -100 to -300 nm; or alternately, in terms of absolute value of retardation of from 0 to 100 or 100 to 300. In other embodiments, the cover plate assembly exhibits a total optical retardation in a range chosen from: (i) from -80 to 80 nm, (ii) from 100 to 260 nm, or (iii) from -100 to -260 nm; or alternately, in terms of absolute value of retardation of from 0 to 80 or 100 to 260. In another embodiment, the cover plate assembly exhibits a total optical retardation in a range chosen from: (i) from -50 to 50 nm, (ii) from 130 to 230 nm, or (iii) from -130 to -230 nm; or alternately, in terms of absolute value of retardation of from 0 to 50 or 130

to 230. In embodiments, the cover plate assembly exhibits a total optical retardation (discussed above) over at least the viewable portion of the HMI display.

Brief Description of the drawings

Figure 1 is a typical crossed-polarizer setup to measure birefringence.
Figure 2 is a close-up of the horizontal and vertical components of the wave illustration retardation and phase shifting.
Figure 3 depicts the effect of tilt angle on the effective refractive index.
Figure 4 depicts a schematic of a typical LCD structure.
Figure 5 is a schematic of an LCD structure assuming an observer is wearing polarized sunglasses.
Figure 6 is a schematic of an LCD structure assuming a compensator layer is added to the HMI touch screen.
Figure 7 is a depiction of an injection mold containing a tab gate with associated polymer flow front.
Figure 8 is a depiction of an injection mold containing a fan gate with associated polymer flow front.
Figure 9 is a depiction of the Re and Rth values for a molded plaque using the CAP of the present invention

Detailed Description of the Invention

Shadowing is an optical defect that occurs when a passenger views the HMI display while wearing polarized sunglasses. It produces variations in brightness from gray to white with the effect that the display appears distorted and/or mottled. This distortion is caused by localized variations in the birefringence. Birefringence, in turn, refers to differences in refractive index of a given transparent substrate, in different directions, which are brought on by stress and/or molecular orientation. Such shadowing usually consists of variations of gray coloring, but when the optical birefringence is large enough, it can even cause shifts in color in the display, starting at yellow, then orange, red, violet and on through the color spectrum. It is desirable that no variations in color occur and that the display remain a uniform color, for example black or gray, but white is also acceptable.

Birefringence of a substrate denoted as Δ, is defined as the difference in refractive index **n,** between any two mutually perpendicular directions. Typically, these directions will be associated with, for example, the machine direction (MD), transverse direction (TD) and thickness direction (thick). If one denotes these directions by the subscript *a, b* and *c*, then one can calculate three different values for the birefringence

$$\Delta_{ab} = n_a - n_b$$
$$\Delta_{bc} = n_b - n_c \qquad (1)$$
$$\Delta_{ac} = n_a - n_c$$

Only two of the three are independent, and the choice of which best to use depends on the application. Birefringence is a parameter reflecting the amount of orientation by way of the refractive index. Refractive index, in turn is an inverse measure of the speed of light in the medium assuming the light wave is polarized in that particular direction. A higher value of n means lower velocity so if $n_a > n_b$, this implies that the light wave polarized along the a direction will travel more slowly than the wave polarized in the b direction. So, given enough distance, the light wave along a will lag further behind b and become increasingly out of phase.

Figure 1 illustrates birefringence in a sample in a typical crossed polarizer configuration. The light source **1** supplies random unpolarized light **2** to the first polarizer **10** having a polarization axis at +45 degrees to the vertical. The resulting polarized light **3** is then incident on a sample **20** of thickness L, whose principal axes are aligned with the vertical and horizontal directions and have refractive indices $\mathbf{n_a}$ and $\mathbf{n_b}$ respectively.

For simplification, the incident light wave **3** can be vectorially decomposed into electric field components along the vertical and horizontal axes and which are normal to the propagation direction. Each of these components will then propagate through the sample at different velocities given the different refractive indices. Because of this speed difference, the exiting wave fronts **5** and **6** will be phase separated by a distance **8** (Figure 2) which is denoted as the optical retardation. Retardation is denoted in units of nanometers, or alternatively as a fraction of the wavelength λ in the medium. For plastics, the wavelength is approximately 570nm assuming a white light source. Hence a "quarter wave" retardation is a sample having a retardation of approximately 142 nm (or one quarter of 570 nm).

When the two components **5** and **6** reach the second polarizer **30,** the waves are effectively recombined to create

the output wave **8** seen by the observer **90.** If the retardation is zero, the waves remain in phase and add back to their original amplitude and direction. Since this combined wave is now oriented 90 degrees to the second polarizer it will be completely blocked, and a black or null state will exist where no light is transmitted. This is the same black state that would be observed if looking through two crossed polarizers with no sample present.

In contrast, if the two components are out of phase, then vectorial addition will result in a portion of the wave being aligned with the 2nd polarizer such that it will be transmitted through. This "light leakage" will vary with the level of retardation and will go through a maximum as retardation is increased, and eventually will return to near zero at integral multiples of the wavelength assuming monochromatic light. If the retardation is equal to λ then this is denoted as the first order extinction point. Likewise, additional extinctions occur at 2λ, 3λ, etc. and are denoted as the 2nd and 3rd order extinction points, respectively.

For white or polychromatic light, each color corresponds to a different wavelength and each will undergo differing levels of extinction assuming a constant retardation in the part. For example, blues and violets are much shorter in wavelength than red, so they will undergo more relative phase shifting as retardation level is increased (*e.g.*, a 100nm retardation shift will be equivalent to a quarter wave shift if λ=400nm but will only be λ/6 shift for a 600nm wavelength). As the various colors undergo varying shifts in their intensity, the color of the light being transmitted changes. At zero retardation, no light is transmitted, and the color appears black. As retardation increases, this color shifts from black to dark gray, and then to white at about 100nm. It stays white from roughly 100nm to 300nm where it begins to shift to yellow. From yellow it shifts to orange, then red and then violet at the 570 nm first order extinction point. Above 570nm, the color cycling essentially repeats, albeit with some slightly different color shifts. However, for the purposes of HMI cover plates, retardation levels over 570nm are unacceptably high from a shadowing perspective.

Retardation variation from about -100 nm to +100nm generally exhibits a black to gray appearance with minimal shadowing. Likewise, retardation variation in the 100 to 300 nm (or -100 to -300) range provides a near uniform white appearance and shows minimal shadowing. In embodiments, both ranges are retardation targets for the present invention. In certain embodiments, the former range is a preferred target for the ultra-low retardation resins as discussed herein. It should be noted that within any given range, the lower the variability of retardation across the plaque is more preferred, but the above are considered the approximate maximum levels of variability that can occur within the band while still maintaining reasonable optical uniformity.

The retardation is easily calculated for any two directions (i, j) from the thickness of the part L, as

$$R_{ij} = L\,\Delta_{ij} \qquad (2)$$

As with birefringence, there are multiple values of retardation depending on which directions are chosen. For the purposes of shadowing, there are two values that are particularly important denoted as **Re** and **Rth.** These are defined as follows:

$$Re = R_{MD-TD} = L\left(n_{MD} - n_{TD}\right) \qquad (3)$$

$$Rth = L\left(n_{thick} - \frac{(n_{MD} + n_{TD})}{2}\right) \qquad (4)$$

This assumes the *a, b* and *c* directions correspond to the MD, TD and thickness of the part accordingly. **Re** and **Rth** are important to shadowing for different reasons. **Re** represents the retardation and phase lag for light waves that are traveling normal to the surface as illustrated in Figure 1. Note **Re** is not influenced by $\mathbf{n_{thick}}$ as normal incidence waves will only be polarized in the plane directions (MD/TD).

For off-axis or tilted viewing, however, $\mathbf{n_{thick}}$ must be considered, hence the need for **Rth.** This is illustrated in Figure 3, where a light wave parallel to the page **65** is incident on the sample at an angle (the vector represents the direction and magnitude of the electric field component which is normal to the propagation direction). After undergoing refraction, this light component changes direction slightly to **66.** The sample is assumed to have an anisotropic refractive index ellipsoid **60** where the refractive index in the thickness direction **62** is smaller than in the planar direction **61.** This would be typical of most films or molded parts having in-plane orientation.

Refractive index is known to vary between the principal axes following an ellipsoidal shape. For normal incidence, the polarization direction will correspond to the horizontal/planar refractive index **61.** But as the angle increases, the effective refractive index corresponds to the point on the ellipsoid where the polarization vector intersects. So as tilt angle

increases, the effective refractive index approaches the thickness value **62.** Note as mentioned below that if the thickness and planar refractive indices are identical, then **60** will take the shape of a sphere instead of an ellipsoid, and thus the effective refractive index will not change with tilt angle. Ideally, we want both **Rth** and **Re** to be small in the display cover to minimize all shadowing. It is also preferred that **Rth** be equal or close to **Re** in value so that no apparent shadowing occurs when viewing angle changes.

It is important to note that shadowing and retardation only matter in the presence of optical polarizers. In fact, shadowing can only occur if the retardation shift occurs between two polarizers such as **10** and **30** in Figure 1. Polarizer pairs function to first isolate a certain polarization direction--which then allows relative phase shifting or retardation of the wave components to occur--and then to vectorially recombine the polarization components such that constructive and destructive interference occurs. Without these polarizers, this interference does not occur. It is for this reason that shadowing does not occur unless the viewer is wearing polarized sunglasses.

While the display module itself has a polarizer pair, the (HMI) touch plate is not between these polarizers so additional optical interference does not take place. The situation changes however, when sunglasses are worn, as now the touch plate is in between the 2$^{nd}$ polarizer of the LCD module and the polarized sunglasses. Sunglasses essentially introduce a third polarizer, and thus a second polarizer pair, and everything in between these polarizers must now be accounted for when trying to reduce shadowing. The following description of examples of HMI panels is provided for further illustration.

Example of LCD Structures

A typical structure of an LCD based HMI panel is illustrated in Figure 4. Elements included are only those related to the optics of the system, and other layers, such as those used for electrical switching and sensing, are not included in the drawings. It is also noted that there are many other design elements and structures that can be included in an LCD module (*e.g.*, light diffusers, brightness enhancing films, color filters, *etc.*) but these are not critical to illustrate optical shadowing or the present invention and so are not shown. It is noted that these elements are typically present in the modules in one of many possible forms, and that these variations can be included in embodiments of the invention.

An LCD module is very similar to the setup in Figure 1, except now the "sample" is replaced with the liquid crystal module **50.** There is a first polarizer **10** and second polarizer stack **30** as before along with some sort of backlight source **1** to provide illumination. The first polarizer has a polarization axis $\phi$ relative to the reference vertical direction with the second polarizer typically rotated 90 degrees to this direction. Typically, the angle $\phi$ is 45 degrees, but this is not required.

Polarizers also typically include protective or "compensation" films that sandwich the active polarizing element **(13** and **33).** These are denoted as **11** and **12** for the first polarizer and **31** and **32** for the second. Layers **11** and **32** are usually made from solvent cast cellulose triacetate film or a cyclo-olefin. Because they are "outside" of the polarizer pair, they do not normally affect retardation, so their retardation is usually not critical. In contrast, layers **12** and **31** are between the polarizers, and so their retardation can affect visual quality. For traditional LCD applications, these films are often designed to have a certain prescribed Re and Rth, so as to cancel out any residual retardation in the liquid crystal module. By properly designing these compensation films, the viewing angle and contrast of the display are increased significantly.

The retardation effects discussed previously with regard to Figure 1, also apply to liquid crystal displays, the difference being that the liquid crystal module **50** is a material whose birefringence is dynamically changing (as opposed to the static birefringence of the sample **20).** There are different types of liquid crystal cells on the market, but regardless of type, the liquid crystal molecules change direction and alignment in response to an applied voltage. By changing this alignment and thus the birefringence, the brightness of light passing through can be modulated from dark to bright using the principles described previously, thereby turning a given pixel on or off. By passing this light through colored filters, various colors can be achieved.

Upon exiting the second polarizer, the light will then pass through the display cover **70.** In most applications, such as a traditional LCD television, the light will pass through the protective cover and on to the observer. Because there is no other polarizer after the cover, its retardation has no effect on the viewing quality.

This situation changes, however, if a 3rd polarizer is brought into the picture such as with an observer wearing polarized sunglasses. This is denoted as **80** in Figure 5. These polarized glasses usually have a polarization axis aligned vertically ($\phi$ = 0 degrees) as this reduces glare better since most reflected light from road and water surfaces is horizontally polarized. In this situation, layers **12, 31, 32** and **70** can all influence retardation (in addition to the liquid crystal module **50),** and thus can have an impact on shadowing. Without the sunglasses, only **12** and **31** have an influence on viewing quality.

Figure 6 illustrates one more aspect of the invention to include an added optical compensation film denoted as **71.** As mentioned previously, the films **12** and **31** are often compensation films having prescribed retardations Re and Rth and designed to cancel out some of the extraneous retardation from the liquid crystal module itself. By negating the superfluous retardation in the module **50,** the panel manufacturer can considerably boost both the contrast ratio and the viewing angle performance.

In an automobile, these films **(12** and **31)** can also potentially influence shadowing and so one option is to modify

the retardation of these films even further to reduce the perception of shadowing viewed by a passenger wearing polarized sunglasses. This option is less preferred however as tweaking the compensation films **12** and **31** would harm the visual performance under normal conditions when sunglasses are not being worn. Instead, it may be preferred to add an additional compensation layer **71** to the touch plate itself, or alternately in place of, or on top of layer **32.** Films can be made to prescribed retardation levels much easier than molded products, so this offers an alternative way to shift retardation either higher or lower as needed. In embodiments, the film (shown on the touch surface) can also function as a protective layer having anti-scratch, hard coat, etc., properties applied to the surface. In embodiments, such films could also be applied on the underside of the panel if desired (not shown). Application could be by direct adhesion, in-mold labeling/-decorating, *etc.*

In embodiments, the HMI touch panel can be bonded to a liquid crystal display component/assembly (e.g., the touch panel can be bonded to a polarizer layer, or a protective layer on the polarizer layer, that resides between the liquid crystal module and the touch panel) with a liquid optically clear adhesive (LOCA) or an optically clear adhesive (OCA) film (or tape). Such adhesives can also be used to bond a protective cover, such as a lens or hard coat layer to the touch panel. In embodiments, the adhesive is cured with ultraviolet light (UV), heat, moisture, or a combination, depending on the manufacturer and specifications for the LOCA or OCA.

In embodiments, the LOCA or OCA can improve the optical performance of the display, e.g., by eliminating air gaps between the layers being bonded. In embodiments, such optical bonding can improve the contrast ratio by reducing the amount of reflected light, thus improving viewability. Reflection from the touch panel screen or a protective cover layer, as well as the adhesive can degrade LCD viewability. Reflection can be caused by an impedance mismatch between air and one or more of the layers. The reflection can make the white brighter, but dilute black and other colors, which can decrease contrast. In certain embodiments, the LOCA is selected to match the refractive index of the HMI touch panel to minimize loss. In embodiments, the LCOA or OCA comprises acrylic-based and/or silicone-based chemistry.

In embodiments, the touch panel is molded with in mold decoration (IMD) or in mold labeling (IML) to provide indicia and/or passive haptic features. In embodiments, the IMD or IML are films that transfer decoration and/or UV curable hard coated surfaces to the plastic touch panel. IML films have the coating against the mold. The molten thermoplastic (e.g., cellulose ester thermoplastic) is injected such that it contacts the film surface facing the mold interior and has good adherence to the thermoplastic. Once the molded part drops out of the mold, the coating on the IML film is subjected to a UV curing step that hardens the surface and can impart scratch and chemical resistance. Other functionalities that can be imparted to the outward facing surface (of the molded part) include anti-fingerprint (oleophobic properties), antiglare and/or anti-reflective attributes. In embodiments, the indicia may be related to the control functions of the HMI unit. In embodiments, multi-color screen-printed and offset lithography printed graphics can be used to produce the indicia or graphics. In certain embodiments, second surface graphics are used, where the decoration is printed on the back side of a clear substrate film, e.g., polycarbonate, acrylic or cellulosic film and injection plastic is contacted on the ink side of the film (e.g., during injection molding). This encapsulates the decoration between the film layer and the injected plastic resulting in a decoration that can't be abraded during use. In embodiments, vision systems can be used to ensure accurate label positioning and can validate label correctness. In embodiments, printing can be performed by any known methods, such as digital printing (e.g., inkjet or xerography), spraying, transfer printing, flexography, gravure, etc.

In embodiments, the thickness of the touch panel module constructed using IMD or IML is comparatively thinner to a similar touch panel constructed using LOCA or OCA bonding for the printed layer. In embodiments, IMD techniques can be used to provide hard coats and/or ink transfer indicia.

<u>HMI Display Production</u>

In one embodiment, the HMI touch plate is prepared via injection molding or compression injection molding (CIM). Both techniques have been used for making optical discs. A third option is the use of thermoforming, particularly to make larger panels. Thermoforming requires the extrusion of sheet that is heated and formed into a mold. It has the advantage that larger size parts are possible, but disadvantages of high scrap rate, potentially higher stress levels and difficulty in molding in lugs and attachment points.

A key aspect with any production technique is the minimization of birefringence. There are two primary types of birefringence, namely orientation birefringence and "glassy" or stress related birefringence. The former arises from residual chain orientation left in the part after molding, whereas the latter results from thermal stresses that form during cooling of the part. Both components will change independently for each production method.

Conventional polymers used in automotive applications include polycarbonate (PC) and PMMA. Of these, PC is disadvantaged relative to PMMA with respect birefringence, in that a very small change in residual stress (or residual orientation) will cause a large change in birefringence. This sensitivity is often quantified via the stress optical coefficient (SOC) which is the change in birefringence that occurs for a unit change in stress.

(5)
$$\Delta_{ij}=SOC^*(\sigma_i-\sigma_j)$$

where σi is the stress in the i direction. There are two values of SOC for a given material, one for stressing above the glass transition temperature in the rubbery state ($SOC_R$), and the other for stressing in the glassy state ($SOC_G$). The former relates to orientational birefringence and the latter is a more traditional stress related birefringence. For PC, both SOC values are typically much higher than for acrylic, which makes low birefringence molding more difficult. In contrast, it has been found that cellulose esters according to embodiments herein can be modified to change the SOC values considerably, even to the point of being nearly zero. It has been discovered that this allows for much more fine tuning of birefringence during molding than either polycarbonate or acrylic.

During injection molding, the geometry and gating of the mold are very important with respect to the effect on stress and birefringence. Figure 7 shows a simple plaque mold **101** with a tab gate **102,** along with the flow front of polymer entering the mold **105.** Polymer entering through the runner **100** is already experiencing orientation and alignment and this continues as it enters the mold.

In the case of this small tab gate, a radially progressing type flow takes place that is analogous to inflation of a balloon. The polymer is being stretched radially as well as circumferentially which results in primary stresses $\sigma_r$ and $\sigma_\Theta$ in the radial and hoop directions **(108).** As shown in formula (5) above, the birefringence increases as the relative stress difference increases and the stress difference tends to be very high closer to the gate. Because of this radial stress pattern, the orientation and birefringence profiles will have a similar radial geometry which serves to amplify shadowing as there will be more angular dependence. Therefore, in embodiments, it is preferred to go with a wider fan or film type gate that provides for a more uniform flow front through the part. This is illustrated in Figure 8 where the flow from **106** is now more uniform and molecular orientation will also be more consistent across this part. This will reduce angular dependence of shadowing as the stress difference **108** will be more consistent. In embodiments where the retardation is very low to begin with, then the angular dependence may not be a major factor and the choice of gate configuration is no longer as critical.

Compression injection molding is an alternative to standard injection molding in that the mold is initially kept partially open during filling to reduce flow stresses, but then closed to produce the final part. For thinner items like optical discs, this can reduce birefringence more than traditional injection molding alone.

Thermoforming is another alternative for producing the display cover and it allows for larger panels than traditional injection molding. Thermoforming offers the additional advantage that multilayer structures can be easily produced. For example, the cellulose ester of the present invention can be coextruded between cap layers of PMMA to produce a hard coat surface. The three-layer sheet can then be thermoformed into the final part as long as sheet and mold temperatures are set up appropriate for the materials involved.

Multilayer thermoforming offers other advantages in that the upper use temperature for the part can be adjusted by using layers having appropriate glass transition temperatures. Likewise, the cap layer can help serve as a protective layer to keep moisture out of the inside of the sheet, and to keep volatile compounds (e.g. plasticizers) inside the structure. This may allow for the use of highly plasticized cellulose esters as core layers with a stiffer cap layer (e.g. PMMA, PC) to seal in the plasticizer and offset the lower Tg.

Any combination of layers can be envisioned for the current invention as it is only critical that the overall structure meet the birefringence requirements and that at least one layer contain the low hydroxyl cellulose ester of the present invention. Because the protective cap layers can be kept thin, even more highly birefringent layers can be used as the total retardation produced can be kept to a minimum.

In one embodiment, part thickness for HMI displays will range from about 1mm up to about 10mm, or 1mm to 8mm, or 1mm to 5mm, or about 2mm to about 10mm, or 2mm to 8mm, or 2mm to 5mm, or from greater than 2mm to 5mm, or from 2mm to 4mm, or from 2mm to 3mm. The thickness has an important effect on birefringence and retardation since, as already mentioned, the retardation is equal to the birefringence multiplied by the thickness. So, all things being equal, a thicker part will have higher retardation. However, it has been discovered that thicker parts may have reduced filling pressures and thus a reduced level of orientational birefringence. So even though the thickness is higher, the average birefringence across the part may be lower and so sometimes the overall retardation will decrease. Thicker parts are otherwise preferred from an impact and crashworthiness standpoint, although not too thick as this adds extra weight. In embodiments, the thickness is about 2 to 3 mm.

It has been discovered that molding with hotter polymer melt temperatures can also help reduce birefringence by lowering viscosity and reducing overall stress and orientation formation. There is usually a practical upper limit on molding for most materials before excessive degradation and/or flashing becomes a problem.

Mold temperatures can also be increased to reduced stressing although this can make cycle times longer (due to a longer cooling cycle). Mold temperature has a particularly strong influence on residual stress and the resulting stress induced birefringence brought about by cooling. To help reduce this further, parts can also be annealed after molding at a temperature close to the glass transition temperature $T_g$. This can minimize the stress component of birefringence but usually does not impact the orientational birefringence. Also, it is less desirable in that it adds significantly to cycle time and

cost.

Other processing parameters such as the injection rate/pressure can influence the birefringence formation and fill rates can be profiled to optimize birefringence. It has been discovered that birefringence can be reduced, particularly in the gate area, by running at higher injection fill rates and/or mold filling pressures, particularly at the end of filling. Likewise hold pressures should also be kept high, but low enough to prevent flashing. If fill rates are too low, it is believed that cooling effects would be too strong during filling which drives up orientational birefringence as the material must flow past a more viscous skin layer.

It is also observed that birefringence can be minimized, particularly in the gate region, by profiling the pressure profile during filling. It was found that a high initial filling rate and packing pressure, followed by a slight reduction in the pack and hold pressures, will lower gate birefringence compared with a constant pressure profile.

Lowering the molecular weight of polymers can reduce the viscosity as well as the orientation that results during molding. However, lower molecular weight is typically a trade off with toughness and impact strength.

In embodiments, the cellulose ester utilized in this invention can be any cellulose ester having a sufficient content of salt or ester moieties of $C_3$ to $C_{10}$ acids, preferably propionate and/or butyrate moieties. Cellulose esters that can be used for the present invention generally comprise repeating units of the structure:

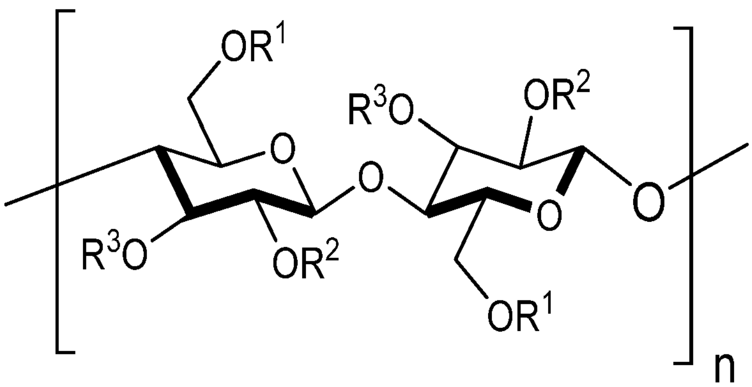

wherein $R^1$, , $R^2$, and $R^3$ are selected independently from the group consisting of hydrogen or straight chain alkanoyl having from 2 to 10 carbon atoms. For cellulose esters, the substitution level is usually expressed in terms of degree of substitution (DS), which is the average number of non-OH substituents per anhydroglucose unit (AGU). Generally, conventional cellulose contains three hydroxyl groups in each AGU unit that can be substituted; therefore, DS can have a value between zero and three. However, low molecular weight cellulose mixed esters can have a total degree of substitution slightly above 3, as a result of end group contributions. Native cellulose is a large polysaccharide with a degree of polymerization from 250 - 5,000 even after pulping and purification, and thus the assumption that the maximum DS is 3.0 is approximately correct. However, as the degree of polymerization is lowered, as in low molecular weight cellulose mixed esters, the end groups of the polysaccharide backbone become relatively more significant, thereby resulting in a DS that can range in excess of 3.0. Because DS is a statistical mean value, a value of 1 does not assure that every AGU has a single substituent. In some cases, there can be unsubstituted anhydroglucose units, some with two and some with three substituents, and typically the value will be a non-integer. Total DS is defined as the average number of all of substituents per anhydroglucose unit. The degree of substitution per AGU can also refer to a particular substituent, such as, for example, hydroxyl, acetyl, butyryl, or propionyl. In embodiments, the degree of polymerization for the cellulose ester is lower than that of the native cellulose. In embodiments, n is an integer in a range from 25 to 250, or 25 to 200, or 25 to 150, or 25 to 100, or 25 to 75.

In one aspect of the invention, a Human Machine Interface (HMI) cover is provided in the form of a sheet, having a thickness of about 2 mm to about 5 mm, comprising a melt processable cellulose ester having a total degree of substitution (DS) of 2.85 to 3. In embodiments, the DS is in a range from 2.9 to 2.97 and more closely represents "zero birefringent" behavior. Alternately, DS can be expressed in terms of the number of hydroxyl groups DSOH. In embodiments, the cellulose ester has a DSOH in the range from 0 to 0.15, or from 0.03 to 0.1. In embodiments, the acyl groups preferably consist of acetyl, propionyl and butyrl.

By having a total DS in the ranges discussed herein, it has been found that the refractive index perpendicular to the chain backbone, is approximately equal to the refractive index parallel to the chain backbone. Thus, the birefringence for the monomer is close to zero, and the value of $SOC_R$ is also very close to zero. Consequently, any orientation that takes place during molding/forming will have negligible effect on birefringence and/or retardation. In contrast, when total DS is below about 2.85, it has been found that there are sufficient hydroxyl groups present such that the refractive index is noticeably higher along the chain axis relative to the perpendicular direction and $SOC_R$ is no longer negligible.

In embodiments, the cellulose ester composition can also contain up to 20 wt% of a plasticizer, although

automotive restrictions on volatile organic compounds (VOCs) suggest that plasticizer level should ideally be zero, or very close to zero, unless the cellulose ester is sealed with a varnish or coating. Alternately, if a multilayer thermoforming method is used, the cellulose ester can be sandwiched between layers that help to prevent plasticizer migration. In embodiments, higher molecular weight plasticizers that are less volatile can be used.

Likewise, in embodiments, up to about 20 wt% of a miscible polymer can be blended in with the cellulose esters. Examples include certain ethyl vinyl acetate (EVAc) copolymers, certain aliphatic polyesters, e.g., poly(butylene succinate) and/or poly(ethylene succinate), PVDF, epoxies, polyvinylpyrrolidone, etc.

In embodiments, the cellulose ester composition can also contain typical additives including impact modifiers, processing aids, stabilizers, UV protectants, colorants, and the like.

Because of fitness for use and processability requirements, in embodiments, the Tg of the cellulose ester plus any plasticizers/modifiers is in the range from 105°C to 160°C, 105°C to 150°C, 110°Cto 160°C, or 120°C to 150°C. In embodiments, the lower Tg limit can be determined by requirements associated with high temperatures that can occur in an automobile interior, particularly in hotter climates. In such embodiments, the display cover must not warp, creep or otherwise deform under these conditions. In embodiments, the higher Tg temperature requirement can be determined by requirements associated with melt processability restrictions. As Tg increases, the processing temperature needed to adequately melt and plasticate the resin also increases, and higher melt temperatures can lead to increased yellowing and degradation. It is noted that in the case of multilayer thermoformed HMI covers, the Tg restriction not be as limited, as long as the additional layers provide the necessary high temperature stiffness to support the panel.

As mentioned previously, molecular weight is also important as it impacts both strength and birefringence. In embodiments, the number average molecular weight (polystyrene equivalent) should ideally be between about 40,000 g/mole and 80,000 g/mole in order to maintain adequate toughness. Higher MW materials have better toughness, but flow orientation and birefringence tend to increase. Fortunately, with the low hydroxyl resin according to embodiments herein, it has been discovered that the material is relatively insensitive to flow orientation and so higher molecular weights can be used. The only limit is in processability in that very high molecular weights are more viscous, and thus more difficult to inject into intricate molds.

Alternately the molecular weight can be defined indirectly in terms of the falling ball viscosity (FBV), as described in ASTM D817 and D1343. In embodiments, cellulosics of the current invention can have an FBV ranging between 5 and 30 seconds. Below this range, the material tends to be too brittle, whereas above this the viscosity is too high.

In embodiments, preferred cellulose esters for the present invention include cellulose acetate propionates, cellulose propionates (or cellulose tripropionate, CTP), and cellulose acetate butyrates. In embodiments, because of Tg limitations, the degree of substitution for acetyl groups DS(Ac), should be below about 2.1, more preferably below about 1.7. It has been found that high acetyl levels tend to push the Tg too high and therefore limit processability. In contrast, materials like cellulose triacetate (CTA) and cellulose acetate (CA) are not preferred as they are difficult to melt process, e.g., without a significant level of plasticizer present (although they can be used as a protective or compensating layer).

In certain embodiments, the Human Machine Interface covers of the invention have a very low optical retardation, wherein all parts of the optical panel within the viewable area have an in-plane optical retardation Re, ranging from -100nm to 100nm and a thickness retardation Rth that is also in the range of -100nm to 100nm. Such a low retardation panel does not require any additional compensation films.

In another embodiment, all parts of the optical panel within the viewable area have an in-plane optical retardation Re, ranging from -80nm to 80nm and a thickness retardation Rth that is in the range of -100nm to 100nm.

In another embodiment, all parts of the optical panel within the viewable area have an in-plane optical retardation Re, ranging from -50nm to 50nm and a thickness retardation Rth that is in the range of -100nm to 100nm.

In certain embodiments, the Human Machine Interface cover of the invention further comprises one or more compensation layers and possess a total optical retardation that is either in the range of

(i) -100 to 100 nm,
(ii) 100 to 300 nm, or
(iii) -100 to -300 nm.

In other embodiments, the Human Interface cover of the invention further comprising one or more compensation layers possess a total optical retardation that is either in the range of -80 to 80nm, 100nm to 260nm, or -100nm to -260nm.

In another embodiment, the Human Interface covers of the invention further comprising one or more compensation layers possess a total optical retardation that is either in the range of (i) -50 to 50nm or (ii) 150 to 250nm or (iii) -250 to -150nm.

Traditional stabilizers, catalysts, impact modifiers, flame retardant agents, reinforcing agents and the like which are well known in the plastic arts may be used to the extent such additives are of a type and/or in an amount that does not cause the cover to have unacceptable optical or strength properties, as described herein. Examples of additives that are contemplated for use include Irgafor® and Irganox® antioxidants, available from BASF and Tinuvin® and Uvinil® light

stabilizers, available from BASF.

As mentioned herein, the use of plasticizers is also an option although the part typically must meet certain limits related to volatile organic compounds and so a plasticized cellulose ester will preferably be sealed in, via the use of a cap layer (e.g. multilayer coextrusion and thermoforming), by co-injection, or using a varnish or sealing type layer.

In embodiments, in addition to having a $T_g$ (as discussed herein), the display panel must also meet certain impact requirements. In embodiments, a cover panel made from the cellulose ester composition having a thickness of 1mm to 10mm, or 1mm to 8mm, or 1mm to 5mm, or 2mm to 10mm, or 2mm to 8mm, or 2mm to 5mm will survive impact of a 1.05 kg steel ball from a height of 20" (50.8 cm) at both room temperature and -30°C without breaking. This height represents an impact energy of 5.2 Joules. Because of the variety of panel geometries available, the panel is supported on a 4" (10.2 cm) diameter tube with impact at the center of the panel or plaque.

In order to have an HMI display panel without shadowing, it is important for the total retardation of all "optically active layers" to fall within one of two ranges, as follows:

1. The first is from -100nm to 100nm, or -80nm to 80nm, as this constitutes the "gray" region on a Michel-Levy chart for light transmission through crossed polarizers using a uniform white light source. The display in this retardation range will always look black or gray, and so shadows will be minimal.
2. The second is from 100nm to 300nm or -100nm to -300nm, or from 100 nm and 260 nm or -100 and -260 nm, as this constitutes the "white" portion of the light transmission. Here shadowing will also be minimal although the panel will appear uniformly white instead of gray.

The reason for targeting one of these two areas, is that the color changes very little with a given change in retardation. In contrast, for retardations above 260nm, or above 300nm (or below -260nm, or below - 300nm) range, the effective color is changing rapidly through non-grayscale values (yellow initially) as retardation is increased. Consequently, even small variations in retardation will produce noticeable shifts in color. It should also be noted that if a portion of the panel is in the gray region, but another portion is in the "white" region, there will be an unacceptable level of apparent shadowing. The entire viewing area (or in one embodiment, the entire panel) should be in one or the other, but not both. Likewise, these ranges listed are the minimum considered to be acceptable but even lower variation ranges around 0nm or around 180nm (or -180nm) are preferred.

Insofar as the above acceptable ranges roughly span 200nm, or 160 nm of retardation, it is desirable that the difference between the maximum and minimum retardation of the part (at least over the viewable area of the HMI cover) be less than or equal to about 200nm, or 160nm. In embodiments, the maximum variability in retardation that a part can have over the entire viewable area and still be acceptable is 160nm. However, if the mean retardation from the part does not fall within the target range, it can be shifted via the addition of an optically active compensation layer to the cover plate.

As an example, a part having a mean retardation of 100nm, with the maximum value being 150nm, and the minimum being 50nm, would have unacceptable shadowing if used by itself, because part of the retardation is in the gray region, and part in the white region. However, since the retardation range (max - min) is only 100nm, the mean value can be shifted downwards using a -100nm optically active compensation layer. This shifts the mean to 0nm, the min value shifts to -50nm and the max value shifts to 50nm. Now all points are within the -80 to +80nm gray region and so shadowing is minimized. Alternately, the mean value could have been shifted upwards so that the entire range falls in the white region.

It should be noted that a 200nm range is essentially the minimum needed to stay within the gray or white bands. In embodiments, the difference between the maximum and minimum retardation Re of the cellulose ester part within the viewable area, will be less than or equal to about 160nm, or preferably less than or equal to 100nm. The narrower the range of retardation values encountered across the part, the lower the shadowing.

To minimize distortions when viewed off angle, it is important that both the in plane Re and thickness retardation Rth be kept low. Ideally if both Re and Rth are kept near zero, the display will appear the same from all viewing angles. As Re increases, there is more optical distortion, and this will vary depending on how the refractive indices vary in the plane of the film relative to the refractive index in the thickness direction. Likewise, for higher values of Re, it is more difficult to define a precise Rth target that will fully eliminate off axis distortion.

The "optically active layers" constitute all layers between the second polarizer of the display **33,** and the polarized sunglasses **80.** Therefore, the outer protective layer **32** of the second polarizer, the HMI display **70,** and any protective/compensation layer(s) applied to the display **71** (or alternately applied in between **32** and **70)** can be considered optically active layers. The sum of the in-plane retardation should be substantially in one of the two ranges described above. It is accepted that areas around the gate or on the edges may be outside of the acceptable range if these areas are hidden (e.g., outside the viewable area of the HMI cover) and/or removed as part of the installation.

In embodiments, the display panel is 2 to 5 mm, or 2 to 4mm, or 2 to 3mm, thick and will survive impact at room temperature and -30°C using a 1.05 kg steel ball dropped from a height of 20" (50.8 cm) without breaking. In embodiments, the HMI display covers are larger than typical molded optical discs and are non-symmetric in geometry, both of which make it much harder to meet the low birefringence requirements (as discussed herein).

In embodiments, the HMI cover panel is produced by injection molding, compression injection molding, or thermoforming and can optionally be annealed to further reduce birefringence. In embodiments, the cover is injection molded and the gate is at least 50% or greater, or at least 60%, or at least 70%, or at least 80%, of the width of the cover on the entry side of the mold, in order to reduce angular dependence of retardation.

In an aspect, a method for making the Human Machine Interface cover is provided that includes the steps of:

(a) providing a mold configured for injection molding, the mold comprising a gate at one end of the mold having an opening configured to introduce molten thermoplastic polymer into the mold, and a mold width at the gate end of the mold of at least 150mm, wherein the gate opening has a width that is at least 50% of the mold width; and

(b) injection molding said cover at a barrel temperature of at least the thermoplastic polymer Tg (in °C) + 60°C.

In embodiments, the gate opening has a width that is at least 60% of the mold width. In embodiments, the barrel temperature is at least the thermoplastic polymer Tg (in °C) + 80°C.

The optically active layers can be produced by various means including solvent casting, extrusion, stretching and so forth. In embodiments, compensating layers can be made from one or more cellulose esters. In another embodiment, compensating layers can be made from oriented polycarbonate, e.g., in the case of common quarter wave plate films. Additional layers can also be incorporated to improve scratch resistance, glare etc. These "hard coat" layers might be applied to a compensating film, for example, which is then adhered to the display panel using in-mold labeling techniques, direct adhesion, coating, or other methods known in the art. In embodiments, the hard coat is chosen from a silicone based hard coat, (poly)siloxane based hard coat, urethane based hard coat, or acrylic based hard coat.

It has also been discovered that molded articles made from cellulose esters having a low hydroxyl content or higher DS(Total) (as discussed herein) maintain optical clarity (i.e., have less haze increase) better than cellulose esters having a higher hydroxyl content or lower DS, when exposed to heat and humidity. Thus, in another aspect, molded articles having improved resistance to moisture induced haze are provided. In embodiments, such molded articles are made from cellulose ester having a total degree of substitution (DS) in the range from 2.85 to 3. In embodiments, the DS is in the range of from 2.9 to 2.97. In embodiments, high heat and/or humidity exposure refers to higher temperature and humidity environmental conditions experienced by typical consumer products, e.g., products that may be put in a dish washer or reside in an automotive interior. In embodiments, the temperature range can be from 27°C to 100°C, or 38°C to 95°C, or 38°C to 78°C. In embodiments, the humidity can be in the range from RH of 80 to 100%, or 90 to 100%.

The cellulose ester compositions having low hydroxyl content (as discussed herein) are useful for providing molded articles that have a requirement of high optical clarity and that will be exposed to high heat and/or humidity in the use of the articles. For example, articles that are put in a dish washer, or articles that are otherwise subjected to heat and humidity (e.g., certain vehicle components) can benefit from using the cellulose ester compositions having low hydroxyl content (as discussed herein). As such, in one aspect, the invention is directed to use of a cellulose ester having low hydroxyl content (as discussed herein) for molded articles requiring high optical quality that may be exposed to high heat and/or humidity during use. In one aspect, the invention is directed to use of a cellulose ester having low hydroxyl content (as discussed herein) for molded articles having reduced haze increase when exposed to high heat and/or humidity during use, compared to similar articles made from cellulose ester having higher hydroxyl content.

This invention can be further illustrated by the following examples of certain embodiments thereof.

## Experimental Section

The following experimental methods were used to characterize molded articles of the present invention.

The melt flow rate, or melt flow index (MFI), is measured following ASTM D-1238 at 300°C and with a 1.2kg load.

Optical birefringence in the plane (Re) was characterized by one of two means. First is by using a Strainoptics™ PS-100SF polarimeter. Testing was conducted in "plane polarization" mode with optimization quantified either with the rotating analyzer method, or with the Strainoptics™ LWC-100 wedge compensator. Measures were made at multiple points across the part and the max and min points also noted.

When both **Re** and **Rth** values are needed, testing was performed with a Woolam™ ellipsometer. The ellipsometer performs a series of measurements at different tilt angles, and then extrapolates retardation results to a full 90 degree tilt in order to determine **Rth.**

Impact strength is determined at room temperature and -30°C. Impact is performed with a 1.05 kg steel ball dropped from a height of 4" (10cm) and 20" (50.8 cm). The panel is supported on a 4" (10.2cm) diameter tube. This height represents a maximum impact energy of 5.2 Joules and the sample must survive impact with no cracks or breaks in order to pass the test.

The degree of substitution of the cellulose esters reported in the examples below was determined by 1H NMR using a JEOL Model 600 NMR spectrometer operated at 600 MHz. The sample tube size was 5 mm and the sample temperature was 80° C. using dimethysulfoxide-d6 with a couple of drops of deuterated trifluroacetic acid as the solvent.

The pulse delay was 5 seconds and 64 scans were acquired for each experiment.

Unless otherwise specified, the glass transition temperature Tg, was determined using a TA DSC 2920 instrument from Thermal Analyst Instruments on non-plasticized samples using DSC with a ramp rate of 20° C./minute according to ASTM D3418. Tg values were extracted from 2nd heating cycle measurements to ensure a clearly denoted transition and the removal of any residual water. The melting point was also measured using DSC according to ASTM D3418. Falling ball viscosity was measured using ASTM Method D1343-91 in ASTM A solvent.

Percent Haze and Light Transmission were measured on 102mm × 102mm × 2mm injection molded plaques using a Hunterlab Ultrascan VIS Dual-Beam spectrophotometer according to ASTM D1003, Sect. 8, Proc. B.

Moisture content of test plaques was measured by a TGA method as follows: a sample of approximately 2 mgs was cut from the edge of a 2mm thick injection molded plaque and loaded into a TA Instruments Q5000SA vapor sorption analyzer. The sample was dried at 60°C and 0% relative humidity for 240 minutes (4 hours). Once the drying step was completed, the sample was equilibrated at 30°C and 90% relative humidity for 300 minutes (5 hours). Percent weight gain (of water) was measured during this timeframe as well as at the end of the 300 minutes. The final % weight gain is the reported moisture absorption value.

Comparative Examples 1 through 30 - Plaque Molding and Effect of Processing Conditions

Rectangular plaques were injection molded on a Toyo Plastar TM-200G2 molding machine having a 50mm screw and 397 cc shot capacity. A designed experiment was conducted using a variety of processing conditions and resins. Rectangular plaques with dimensions of 10.2cm by 15.2cm and a thickness of 2.5mm were produced. The mold was filled with a film type gate along the entire 10.2cm short side of the plaque.

Three polycarbonate resins were molded including Makrolon™ 2458 (19 MVR or 20 MFR), Makrolon™ 2207 (35 MVR or 38 MFR) and Tarflon™ LC1500 (65 MVR or 70 MFR). The Makrolon resins were supplied by Bayer (Covestro) and the Tarflon resin by Idemitsu Kosan Company. In addition to the polycarbonate samples, a PMMA polymer Acrylite™ H12 (Evonik Industries) was also tested as a control as well as a commercial cellulose acetate propionate (CAP), Eastman Treva GC6021 (Eastman Chemical Company) having a total DS of 2.68.

Mold temperature was fixed at 82°C for the PMMA and CAP samples and 88C for the polycarbonate samples. Barrel temperature, and injection speed were all varied to determine optimal conditions. Retardation values (Re) were then measured 1 cm from the gate, at the center of the plaque, and 1 cm from the non-gated end of the plaque. Maximum and minimum values were also noted over the entire part, but excluding the 2 cm region near the gate. It is known that retardation levels will be higher near the gate region, but it is assumed that this high retardation could be incorporated into a larger gate area that would be removed and/or hidden from view upon final assembly of the panel. The molding conditions and test results are listed in Table 1.

A review of Table 1 reveals that, for the polycarbonate samples, only Sample CE18 fell within the desirable target retardation range (-100 to 100 nm) and/or had a retardation variability less than the more preferred 100 nm range. This was produced using the 65 MVR sample running at hotter barrel temperature and fast injection rate. For this part to be acceptable, the gate region would have to be excluded from the viewing area of the panel as already noted, but it could potentially be used without additional compensating layers.

Samples CE14 was within the 200 nm broader range, but the mean would need to be shifted via a compensation film for an HMI application. Performance would not be as good as CE18, but might still be acceptable for some applications. Sample CE17 was of intermediate performance and had a retardation range falling within an intermediate 160nm range. If the gate region was excluded from the viewable area, this part would be acceptable without a compensating layer and would fall in between the shadowing performance of CE14 and CE18.

For the other PC samples, the processing conditions did not produce sufficiently low variability in retardation and would have produced unacceptable shadowing. Likewise, the lower MVR samples were not even close to the required retardation targets.

The acrylic samples (CE19 through CE24) had low retardation profiles but were not useful because of their low impact strength (impact data not shown). If impact strength had been acceptable, these could have been used without a compensation layer although CE19 and CE21 would need to exclude the gate region from the viewable area.

The CAP samples (CE25 through CE30) had higher retardation than the cellulosics of the present invention. As discussed herein, the DS for these CAP samples was lower than the cellulosics according to the invention. Only CE26 and CE30 had acceptably low variability in retardation. CE26 could be used in the "white" region without a compensator if a small part of the gate area was excluded from the viewable area. CE30 would require a compensator film to shift the mean retardation downward into the gray region, or upward into the white region. The gate region of CE30 would also need to be excluded from the viewable area.

Comparative Examples 40 through 48. SOC Data

Values of SOC for both the glassy (SOCg) and rubbery (SOCr) were determined for a series of materials. SOCg was estimated by loading a tensile bar in an Instron tensile testing rig and stressing the part incrementally while measuring changes in the retardation. Stresses were maintained in the linear regime below the yield point. Retardation values were then converted to birefringence via the part thickness, and the birefringence plotted vs. stress. The slope of this plot was the SOCg value.

SOCr values were determined by stretching film samples at different stretch ratios using a Brueckner laboratory film stretcher. Initial film samples were 100mm × 100mm and typically 200 to 250um thick. Samples were stretched nominally at a temperature about 10°C above the Tg, to different stretch ratios. After stretching, the retardation was measured and compared with the stresses in the film at the end of stretching (determined from force gauges built into the film stretcher. SOCr could then be estimated from a plot of the birefringences at the different stretch ratios plotted versus the stress difference in the film at each given stretch ratio.

Actual SOC values are listed in Table 2. Note that the PC and PMMA values were obtained from the literature (Wimberger-Friedl, R. (1991) Orientation, stress and density distributions in injection-moulded amorphous polymers determined by optical techniques, Eindhoven: Technische Universiteit Eindhoven DOI:10.6100/IR364279). Values for CTA were estimated from the data in Cellulose (2015) 22: 3003-3012.

The values for SOCg are all comparable with the exception that PMMA is slightly negative, and PC has a much higher value. SOCr values, on the other hand, change over a much wider range. PMMA for example is known to change significantly with orientation temperature, hence the range listed. For cellulose esters, it can be observed that SOCr values are a strong function of the total DS. As DS approaches 3, the SOCr value decreases, and as with the case of cellulose triacetate, actually crosses through zero and becomes negative. Consequently, for low birefringence molding, it is desirable to have a composition where the SOCr is close to zero. This shows the benefit (for the cellulosics tested) of having DS(tot) of about 2.85, or about 2.9, or higher.

Examples 70 to 75 - Plaques Molded from CAP

In this example various CAPs were molded on a Toyo M90 injection molding machine. The plaque was nominally 10cm×10cm and was 2mm thick. Screw speed was fixed at 50RPM and cooling time in the mold varied from 18 to 30 seconds, being optimized for each sample (although it was later determined that mold cooling time had minimal effect on retardation). Injection pressure was nominally set at 1200 psi, with injection speed varied between a 0 and 100% speed setting on the machine. Typically faster rates gave the best optical performance.

CAP composition, properties, molding conditions, and retardation data is shown in Table 3. CE70 and 71 involved lower DS CAP and retardation values tended to be higher, regardless of how processing conditions were adjusted. The plaques look white and/or gray when viewed through crossed polarizers. Examples 72 through 74 were high DS CAP resins according to embodiments of the invention and retardation was reduced significantly. It was also determined that by profiling the injection pressure and reducing the pack and hold pressures relative to the injection pressure, the retardation in the gate region could be reduced to near zero (as in 73 and 74). Note that even though the retardation in the gate was near zero as measured with the polarimeter, there was still a violet hue to the material around the gate. As shown in a later example, this is due to dispersion of the retardation as a function of wavelength. It is believed that it is should be possible to eliminate this violet hue with further adjustments or it can be excluded from the viewing area of the display.

Example 75 had an intermediate DS and so its optical performance was borderline. Retardations shifted higher over most of the plaque and it was impossible to eliminate the retardation in the gate region.

Examples 100 to 101- HMI Panels Made from CAP

In this example, a 2mm thick HMI panel was molded on a 200 ton injection molding machine. The panel was 160mm wide on the gated end and expanded to 200mm on the far end. The length of the panel was 150mm, with the part curving slightly to simulate a typical HMI touch cover. A fan gate was used that was roughly 65% of the width of the part. Mold temperature was set at 85°C and barrel temperature was 215°C.

Screw speed was nominally 110RPM with an injection rate of 7.5 cm/s for all of the runs which was near the max the molding machine would provide before flashing occured. It was observed that lower birefringence was observed with faster injection rates, so a machine with higher clamp pressure should provide even better performance. Other variables had less of an effect on retardation.

Two CAP materials were molded, the first being identical to Ex 46 and having an FBV of 16. The second had a DS(Pr) of 2.04, a total DS of 2.94, and an FBV of 25. Both materials produced plaques that were near uniformly black when viewed through crossed polarizers. The only exception was a violet hue near the gate region. Both had retardations ranging from 0 nm to a maximum of about 35 nm when measured with the polarimeter and a white light source. There was

no noticeable change in the plaque color when viewed from different angles.

The plaque for Ex. 100 was also measured using an ellipsometer and the data plotted in Figure 9, for both Re and Rth as a function of wavelength. It is noted that the Re values are uniformly low except at the gate and at very short wavelengths (i.e. the blue/violet region). This dispersion effect appears to be the reason for the violet color. Rth values were also low and below 100nm (or above -100nm) for all except the extremely long wavelength (almost infrared region) which is why there was no noticeable change in color with change in viewing angle.

Although not tabulated, when we measure values of Rth for other polymers like PC were measured, it was not uncommon to have very high values, often exceeding 1000nm or more. It was discovered that it was very difficult to control Rth when the material had high SOC values and so producing a part with good viewing angle consistency can become very difficult.

Examples 200 to 203. Thermoformed Parts

To illustrate thermoforming as method for producing HMI panels, sheet was extruded from each of several resins and then thermoformed into a tray mold using a Hydratrim laboratory thermoformer. The sheet was nominally 0.6 mm thick and produced by extrusion on a 50mm single screw extruder. The tray mold was for a dinner tray for frozen food items, and was 16cm × 12 cm, with a 4 cm depth of draw. Sheet was first preheated in an oven at 287°C for 13 to 20 seconds, and then drawn into the mold with vacuum assist, before cooling. The mold was maintained at ambient conditions.

Comparative Example 200 used the same CAP as CE44 and had an FBV of 20. After forming, the bottom of the tray had variations of white and black color when viewed between crossed polarizers, with a range of retardation (Re) from about 0 to 125nm.

Example 201 was produced using the same CAP resin as in Ex 47 that had an FBV of approximately 5. The retardation was consistently at or very near 0 nm across the bottom of the part and was uniformly black in appearance between crossed polarizers.

Example 202 was identical to 201 except it had 6% of Admex 770 polymeric plasticizer compounded in during formulation. It produced slightly more retardation than 201 with a maximum retardation of about 20nm, but which was still almost solid black in appearance when viewed between crossed polarizers.

Example 203 was a cellulose tripropionate resin (CTP) similar to Ex 48 but also contained 15% of TEG-EH plasticizer. Parts formed had a range of retardation from about 0 to 40nm. The part was fairly uniform black/gray with very little shadowing.

Example 300 - Haze Due to Humidity

In this example two different CAP materials were molded into 10cm × 10cm × 2mm thick plaques. CAP1 material was molded using a 1999 Toyo Si-110 injection molding machine with a GP Screw under the following conditions:

Barrel Temperature: 485°F
Mold Temperature: 185°F
Inject/Pack/Hold Pressure: 800/700/500 psi
Inject/Pack/Hold Time: 10/4/8 sec
Screw Position: 2 in
Screw Speed: 150 rpm
Cooling Time: 8 sec
Back Pressure: 100 psi

CAP 2 material was molded using a Toyo M90 injection molding machine under the following conditions:

Barrel Temperature: 485°F
Mold Temperature: 220°F
Inject Pressure: 1500 psi
Cooling Time: 18 sec

The plaques were placed an ESPEC Model BTX-475 Environmental Chamber and exposed to conditions of 90°C and 95% RH for 72 Hrs. The percent haze for each plaque before and after exposure were measured. The moisture absorption was also measured for each material. The CAP properties, as well as haze and moisture absorption data are listed in Table 4.

A review of Table 4 reveals that CAP material having the higher DS (or lower hydroxyl content), had less than 8% difference in moisture absorption, but significantly less haze (or haze increase) after exposure to the high temperature and

humidity conditions.

Table 1. Plaque Injection Molding Data

| Number | Polymer | MFR | Barrel Temp (C) | P (MPa) | Inj Speed (cm/s) | Re (gate) | Re (center) | Re (end) | Re(min) | Re(max) | Re (range) |
|---|---|---|---|---|---|---|---|---|---|---|---|
| CE1 | PC | 20 | 316 | 14.7 | 1.3 | >2800 | 2020 | 216 | 0 | >2800 | >2800 |
| CE2 | PC | 20 | 316 | 12.0 | 4.1 | 2350 | 289 | 72 | 0 | 1372 | 1372 |
| CE3 | PC | 20 | 332 | 12.5 | 1.3 | >2800 | 1033 | 72 | 0 | >2800 | >2800 |
| CE4 | PC | 20 | 332 | 10.9 | 4,1 | 866 | 1011 | 50 | 0 | 1155 | 1155 |
| CE5 | PC | 20 | 349 | 10.5 | 1.3 | 1949 | 627 | 57 | -20 | 1877 | 1897 |
| CE6 | PC | 20 | 349 | 9.9 | 4.1 | 2310 | 40 | 22 | 0 | 1300 | 1300, |
| CE7 | PC | 38 | 316 | 12.5 | 1.3 | 450? | 340 | 110 | -57 | 1155 | 1212 |
| CES | PC | 38 | 316 | 10.6 | 4.1 | 2021 | 86 | 55 | 0 | 1155 | 1155 |
| CE9 | PC | 38 | 332 | 11.1 | 1.3 | 570 | 1054 | 72 | -45 | 1054 | 1100 |
| CE10 | PC | 38 | 332 | 9.2 | 4.1 | 867 | 0 | 28 | 0 | 177 | 177 |
| CE11 | PC | 38 | 349 | 9.1 | 1.3 | 1300 | 68 | 0 | 0 | 1588 | 1588 |
| CE12 | PC | 38 | 349 | 2.5 | 4.1 | 744 | 154 | 0 | 0 | 939 | 939 |
| CE13 | PC | 70 | 316 | 10.2 | 1.3 | 37.3 | 570 | 0 | -50 | 570 | 620 |
| CE14 | PC | 70 | 316 | 9.2 | 4.1 | 1430 | 15 | 17 | 0 | 171 | 171 |
| CE15 | PC | 70 | 332 | 9.4 | 1.3 | 195 | 296 | 28 | -57 | 399 | 456 |
| CE16 | PC | 70 | 332 | 8.5 | 4.1 | 770 | 22 | 0 | 0 | 720 | 720 |
| CE17 | PC | 70 | 349 | 7.1 | 1.3 | 399 | -29 | -6 | -29 | 125 | 154 |
| CE18 | PC | 70 | 349 | 5.7 | 4.1 | 257 | -40 | -11 | -23 | 68 | 91 |
| CH19 | PMMA | | 221 | 10.0 | 1.3 | -160 | -86 | -34 | -86 | 17 | 103 |
| CE20 | PMMA | | 221 | 9.2 | 4.1 | -68 | -57 | -23 | -63 | 11 | 74 |
| CE21 | PMMA | | 238 | 9.2 | 1.3 | -103 | -57 | -11 | -86 | 0 | 86 |
| CE22 | PMMA | | 238 | 7.9 | 4.1 | -57 | -46 | -17 | -34 | 0 | 34 |
| CE23 | PMMA | | 254 | 7.8 | 1.3 | -46 | -34 | -11 | -46 | 0 | 46 |
| CE24 | PMMA | | 254 | 6.4 | 4.1 | -46 | -23 | 0 | -34 | 11 | 46 |
| CE25 | CAP | | 221 | 10.5 | 1.3 | -87 | -57 | 289 | -57 | 289 | 346 |
| CE26 | CAP | | 221 | 8.4 | 4.1 | 314 | 314 | 228 | 228 | 314 | 86 |

(continued)

| Number | Polymer | MFR | Barrel Temp (C) | P (MPa) | Inj Speed (cm/s) | Re (gate) | Re (center) | Re (end) | Re(min) | Re(max) | Re (range) |
|---|---|---|---|---|---|---|---|---|---|---|---|
| CE27 | CAP | | 238 | 9.1 | 1.3 | -188 | -171 | 171 | -171 | 171 | 342 |
| CE28 | CAP | | 238 | 7.8 | 4.1 | 285 | 231 | 125 | 125 | 231 | 106 |
| CE29 | CAP | | 254 | 8.3 | 1.3 | 285 | 257 | 86 | 86 | 257 | 171 |
| CE30 | CAP | | 254 | 7.1 | 4.1 | 257 | 171 | 86 | 86 | 171 | 85 |

Table 2. SOC Data

| Number | Description | DS(tot) | DS(Ac) | DS(Pr) | SOCg | SOCr |
|---|---|---|---|---|---|---|
| CE40 | PMMA | | | | -4.4 | -20 to +70 |
| CE41 | PC | | | | 89 | 345 |
| CE42 | CA | 2.44 | 2.44 | 0 | 12 | |
| CE43 | CTA | 2.97 | 2.97 | 0 | 16 | -40 |
| CE44 | CAP | 2.7 | 0.07 | 2.63 | 18.3 | 870 |
| CE45 | CAP | 2.81 | 0.83 | 1.98 | | 105 |
| 46 | CAP | 2.93 | 1.06 | 1.87 | 11 | 38 |
| 47 | CAP | 2.95 | 1.52 | 1.43 | 11.6 | 100 |
| 48 | CTP | 2.93 | 0 | 2.93 | 17.6 | |

Table 3. CAP Plaque Data

| **Sample** | **DS(Pr)** | **DS(tot)** | **FBV** | **T barrel** | **T mold** | **%speed** | **Re gate** | **Re center** | **Re edge** |
|---|---|---|---|---|---|---|---|---|---|
| CE70 | 2.63 | 2.7 | 20 | 252 | 252 | 100 | -114 | 211 | 68 |
| CE71 | 2.63 | 2.7 | 20 | 252 | 252 | 50 | -57 | 257 | 57 |
| 72 | 1.87 | 2.93 | 16 | 252 | 252 | 60 | -684 | 11 | 6 |
| 73 | 2.04 | 2.96 | 12 | 227 | 243 | 75 | 0 | 23 | 23 |
| 74 | 1.95 | 2.93 | 14 | 227 | 243 | 75 | 0 | 17 | 17 |
| 75 | 2 | 2.84 | 7 | 252 | 257 | 50 | -530 | 63 | 23 |

Table 4: CAP Haze Testing Data

| Sample | DS (total) | DS (Ac) | DS (Pr) | Haze 0 Hr | Haze 72 Hr | Moisture Absorption |
|---|---|---|---|---|---|---|
| CAP 1 | 2.66 | 0.02 | 2.64 | 1.5 | 93.0 | 3.47% |
| CAP 2 | 2.88 | 1.02 | 1.86 | 3.8 | 12.0 | 3.22% |

## Claims

**1.** A Human Machine Interface cover in the form of a sheet, having a thickness of about 2 mm to about 5 mm, comprising a cellulose ester composition comprising a cellulose ester comprising the repeating units of the structure:

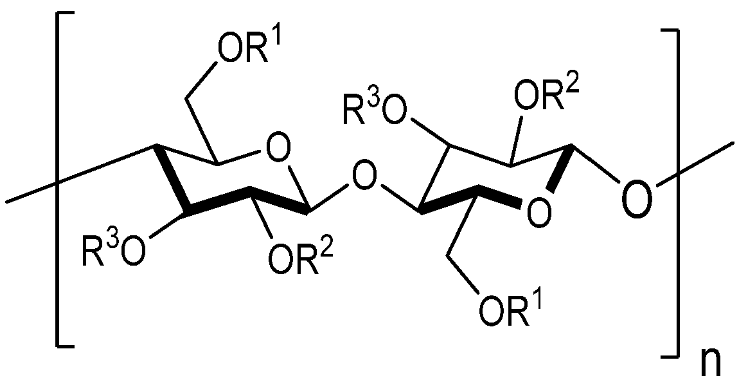

wherein $R^1$ , $R^2$ , and $R^3$ are selected independently from the group consisting of hydrogen or straight chain alkanoyl having from 2 to 10 carbon atoms, preferably 1 2 3
wherein R , $R^2$, and R are selected independently from propanoyl and/ or butanoyl, and

having a low hydroxyl content with a total degree of substitution (DS) in the range from 2.85 to 3.

2. The Human Machine Interface cover of claim 1, wherein the cellulose ester has a DS in the range from 2.9 to 2.97.

3. The Human Machine Interface cover of claim 1 or 2, wherein the cover possesses a total optical retardation range span of 160nm or less, or 100nm or less, measured by the difference between maximum and minimum retardation values over the viewable area of the HMI panel.

4. The Human Machine Interface cover of any of claims 1 to 3, further comprising one or more compensation film layers.

5. The Human Machine Interface cover of any of claims 1 to 4, which possesses a total optical retardation which is in the range of:

(i) -100 to 100 nm,
(ii) 100 to 300 nm, or
(iii) -100 to -300 nm.

6. The Human Machine Interface cover of claim 5, wherein said cover exhibits total optical retardation in the range of -80nm to 80 nm or total optical retardation of from 100nm to 260nm or from -100nm to -260nm.

7. The Human Machine Interface cover of any of claims 1 to 6, wherein the cellulose ester has a DSOH in the range from 0 to 0.15 or from 0.03 to 0.1.

8. The Human Machine Interface cover of any of claims 1 to 7, wherein the cellulose ester composition further comprises up to 20 wt% plasticizer.

9. The Human Machine Interface cover of any of claims 1 to 8, wherein the cellulose ester composition further comprises up to 20 wt% of a polymer miscible with the cellulose ester.

10. The Human Machine Interface cover of any of claims 1 to 9, wherein the cellulose ester is chosen from CAP, CAB or a combination thereof.

11. The Human Machine Interface cover of any of claims 1 to 10, wherein the cellulose ester is CAP.

12. The Human Machine Interface cover of any of claims 1 to 11, wherein the cover further comprises a hard coat or an IML film, wherein the hard coat is chosen from silicone based hard coat, (poly)siloxane based hard coat, urethane based hard coat, or acrylic based hard coat.

13. A method for making the Human Machine Interface cover of any of claims 1 to 12, which comprises the steps:

(a) providing a mold configured for injection molding, said mold comprising a gate at one end of the mold having an opening configured to introduce molten thermoplastic polymer into the mold, and a mold width at the gate end of the mold of at least 150mm, wherein the gate opening has a width that is at least 50% of the mold width; and
(b) injection molding said cover with the cellulose ester composition of claim 1 at a barrel temperature of at least said cellulose ester Tg (in °C) + 60°C and an injection speed of at least 5 cm/s.

14. The method of claim 13, wherein the gate opening has a width that is at least 60% of the mold width or wherein the barrel temperature is at least the thermoplastic polymer Tg (in °C) + 80°C.

**Patentansprüche**

1. Benutzer Interface (Human Machine Interface) Abdeckung in Form einer Platte mit einer Dicke von etwa 2 mm bis etwa 5 mm, umfassend eine Cellulose Ester-Zusammensetzung, die einen Cellulose Ester aufweist, der die sich wiederholenden Einheiten der Struktur aufweist:

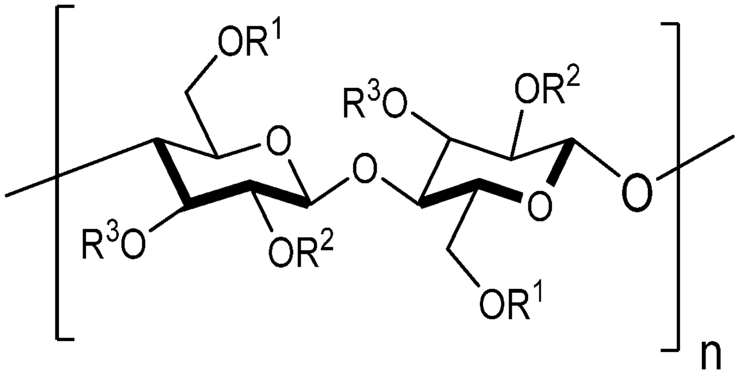

wobei $R^1$, $R^2$ und $R^3$ unabhängig voneinander ausgewählt sind aus der Gruppe bestehend aus Wasserstoff oder geradkettigem Alkanoyl mit 2 bis 10 Kohlenstoffatomen, vorzugsweise wobei $R^1$, $R^2$ und $R^3$ unabhängig voneinander ausgewählt sind aus Propanoyl und/oder Butanoyl, und
mit einem niedrigen Hydroxylgehalt und einem gesamten Substitutionsgrad (DS) im Bereich von 2,85 bis 3.

2. Benutzer-Interface Abdeckung nach Anspruch 1, wobei der Cellulose Ester einen Substitutionsgrad im Bereich von 2,9 bis 2,97 aufweist.

3. Benutzer-Interface Abdeckung nach Anspruch 1 oder 2, wobei die Abdeckung eine gesamte optische Retardation von 160 nm oder weniger oder 100 nm oder weniger aufweist, gemessen an der Differenz zwischen maximalen und minimalen Retardationswerten über den sichtbaren Bereich des HMI-Panels.

4. Benutzer-Interface Abdeckung nach einem der Ansprüche 1 bis 3 weiter aufweisend eine oder mehrere Ausgleichsfolienschichten.

5. Benutzer-Interface Abdeckung nach einem der Ansprüche 1 bis 4, wobei die Benutzer-Interface Abdeckung eine optische Gesamtretardation im Bereich von

   (i) -100 bis 100 nm,
   (ii) 100 bis 300 nm, oder
   (iii) -100 bis -300 nm

   aufweist

6. Benutzer-Interface Abdeckung nach Anspruch 5, wobei die Abdeckung eine gesamte optische Retardation im Bereich von -80nm bis 80 nm oder eine gesamte optische Retardation von 100nm bis 260nm oder von -100nm bis -260nm aufweist.

7. Benutzer-Interface Abdeckung nach einem der Ansprüche 1 bis 6, wobei der Cellulose Ester einen Hydroxyl-Substitutionsgrad (DSOH) im Bereich von 0 bis 0,15 oder von 0,03 bis 0,1 aufweist.

8. Benutzer-Interface Abdeckung nach einem der Ansprüche 1 bis 7, wobei die Cellulose Ester-Zusammensetzung außerdem bis zu 20 Gew.-% Weichmacher enthält.

9. Benutzer-Interface Abdeckung nach einem der Ansprüche 1 bis 8, wobei die Cellulose Ester-Zusammensetzung ferner bis zu 20 Gew.-% eines mit dem Cellulose Ester mischbaren Polymers umfasst.

10. Benutzer-Interface Abdeckung nach einem der Ansprüche 1 bis 9, wobei der Cellulose Ester aus CAP, CAB oder einer Kombination davon ausgewählt ist.

11. Benutzer-Interface Abdeckung nach einem der Ansprüche 1 bis 10, wobei der Cellulose Ester CAP ist.

12. Benutzer-Interface Abdeckung nach einem der Ansprüche 1 bis 11, wobei die Abdeckung außerdem eine harte Beschichtung oder eine IML-Folie umfasst, wobei die harte Beschichtung ausgewählt ist aus einer harten Beschichtung auf Silikonbasis, einer harten Beschichtung auf (Poly)siloxanbasis, einer harten Beschichtung auf

Urethanbasis oder einer harten Beschichtung auf Acrylbasis.

**13.** Verfahren zur Herstellung der Abdeckung für ein Benutzer-Interface nach einem der Ansprüche 1 bis 12, das die folgenden Schritte umfasst:

(a) bereitstellen einer Form, die für das Spritzgießen konfiguriert ist, wobei die Form einen Anschnitt an einem Ende der Form aufweist, der eine Öffnung aufweist, die konfiguriert ist geschmolzenes thermoplastisches Polymer in die Form einzuführen, und eine Formbreite am Anschnittende der Form von mindestens 150 mm aufweist, wobei die Anschnittöffnung eine Breite aufweist, die mindestens 50 % der Formbreite beträgt und
(b) Spritzgießen der Abdeckung mit der Zelluloseester-Zusammensetzung nach Anspruch 1 bei einer Zylindertemperatur von mindestens am Zelluloseester-Tg (in °C) + 60 °C und einer Einspritzgeschwindigkeit von mindestens 5 cm/s.

**14.** Verfahren nach Anspruch 13, wobei die Anschnittöffnung eine Breite hat, die mindestens 60 % der Formbreite beträgt, oder wobei die Zylindertemperatur mindestens den Tg des thermoplastischen Polymers (in °C) + 80 °C beträgt.

## Revendications

**1.** Revêtement d'interface homme-machine sous la forme d'une feuille, ayant une épaisseur comprise entre environ 2 mm et environ 5 mm, comprenant une composition d'ester de cellulose comprenant un ester de cellulose comprenant les unités de répétition de la structure suivante :

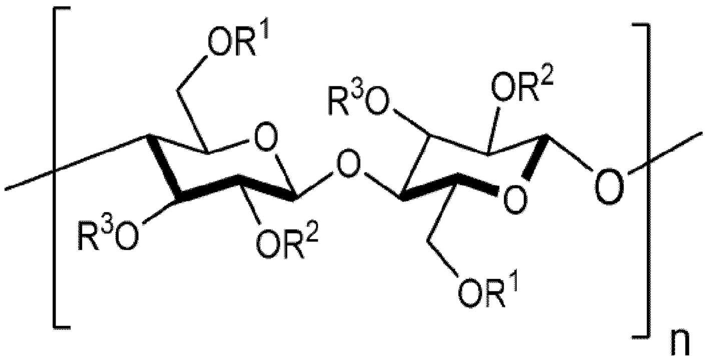

dans lequel $R^1$, $R^2$ et $R^3$ sont choisis indépendamment parmi le groupe constitué de l'hydrogène ou d'un alcanoyle à chaîne linéaire ayant de 2 à 10 atomes de carbone, préférentiellement
dans lequel $R^1$, $R^2$ et $R^3$ sont choisis indépendamment parmi le propanoyle et/ou le butanoyle, et
ayant une faible teneur en groupes hydroxyles avec un degré de substitution (DS) total compris entre 2,85 et 3.

**2.** Revêtement d'interface homme-machine selon la revendication 1, dans lequel l'ester de cellulose a un DS compris entre 2,9 et 2,97.

**3.** Revêtement d'interface homme-machine selon la revendication 1 ou 2, dans lequel le revêtement possède une étendue de la plage de retard optique total inférieure ou égale à 160 nm, ou inférieure ou égale à 100 nm, mesurée par la différence entre des valeurs de retard maximales et minimales sur la zone visualisable du panneau HMI.

**4.** Revêtement d'interface homme-machine selon l'une quelconque des revendications 1 à 3, comprenant en outre une ou plusieurs couches de film de compensation.

**5.** Revêtement d'interface homme-machine selon l'une quelconque des revendications 1 à 4, qui possède un retard optique total qui est compris entre :

(i) -100 et 100 nm,
(ii) 100 et 300 nm, ou
(iii) -100 et -300 nm.

6. Revêtement d'interface homme-machine selon la revendication 5, dans lequel ledit revêtement présente un retard optique total compris entre -80 nm et 80 nm ou un retard optique total entre 100 nm et 260 nm ou entre -100 nm et -260 nm.

7. Revêtement d'interface homme-machine selon l'une quelconque des revendications 1 à 6, dans lequel l'ester de cellulose a un DSOH compris entre 0 et 0,15 ou entre 0,03 et 0,1.

8. Revêtement d'interface homme-machine selon l'une quelconque des revendications 1 à 7, dans lequel la composition d'ester de cellulose comprend en outre jusqu'à 20 % en poids de plastifiant.

9. Revêtement d'interface homme-machine selon l'une quelconque des revendications 1 à 8, dans lequel la composition d'ester de cellulose comprend en outre jusqu'à 20 % en poids d'un polymère miscible avec l'ester de cellulose.

10. Revêtement d'interface homme-machine selon l'une quelconque des revendications 1 à 9, dans lequel l'ester de cellulose est choisi parmi le CAP, le CAB ou une combinaison de ceux-ci.

11. Revêtement d'interface homme-machine selon l'une quelconque des revendications 1 à 10, dans lequel l'ester de cellulose est le CAP.

12. Revêtement d'interface homme-machine selon l'une quelconque des revendications 1 à 11, dans lequel le revêtement comprend en outre une couche dure ou un film IML, dans lequel la couche dure est choisie parmi une couche dure à base de silicone, une couche dure à base de (poly)siloxane, une couche dure à base d'uréthane, ou une couche dure à base d'acrylique.

13. Procédé de fabrication du revêtement d'interface homme-machine selon l'une quelconque des revendications 1 à 12, qui comprend les étapes suivantes :

(a) la fourniture d'un moule configuré pour le moulage par injection, ledit moule comprenant une entrée au niveau d'une extrémité du moule ayant une ouverture configurée pour introduire un polymère thermoplastique fondu dans le moule, et une largeur de moule à l'extrémité d'entrée du moule d'au moins 150 mm, dans lequel l'ouverture d'entrée a une largeur qui est d'au moins 50 % de la largeur de moule ; et
(b) le moulage par injection dudit revêtement avec la composition d'ester de cellulose de la revendication 1 à une température de cylindre d'au moins la Tg dudit ester de cellulose (en °C) + 60 °C et une vitesse d'injection d'au moins 5 cm/s.

14. Procédé selon la revendication 13, dans lequel l'ouverture d'entrée a une largeur qui est d'au moins 60 % de la largeur de moule ou dans lequel la température de cylindre est d'au moins la Tg du polymère thermoplastique (en °C) + 80 °C.

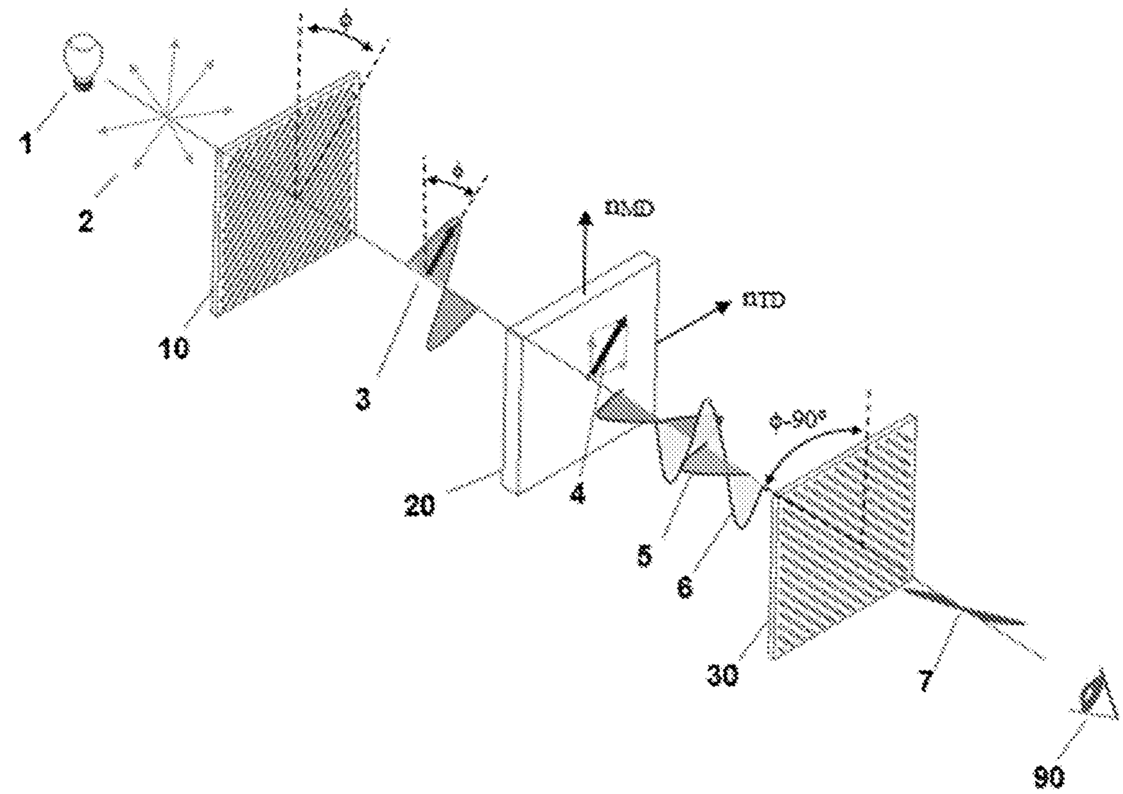


Figure 1

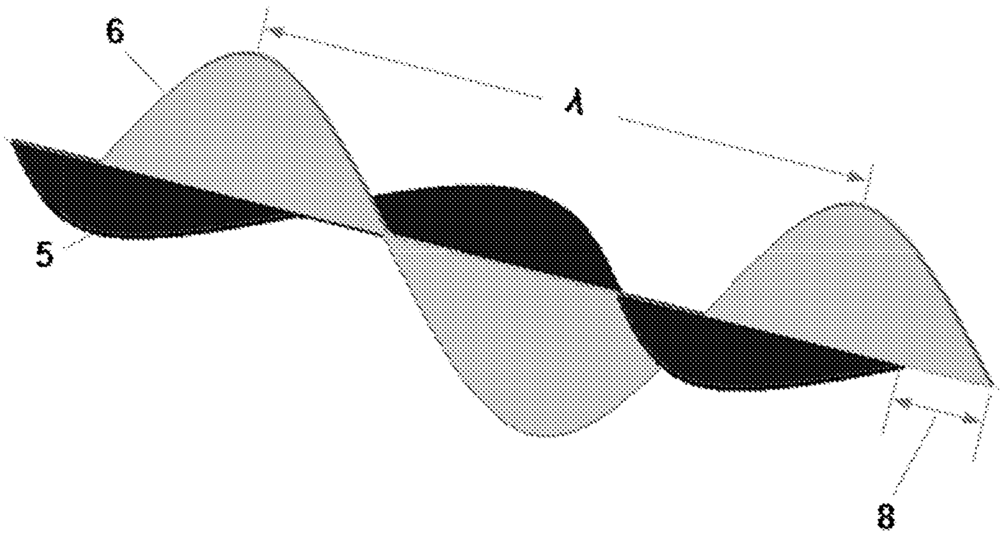


Figure 2

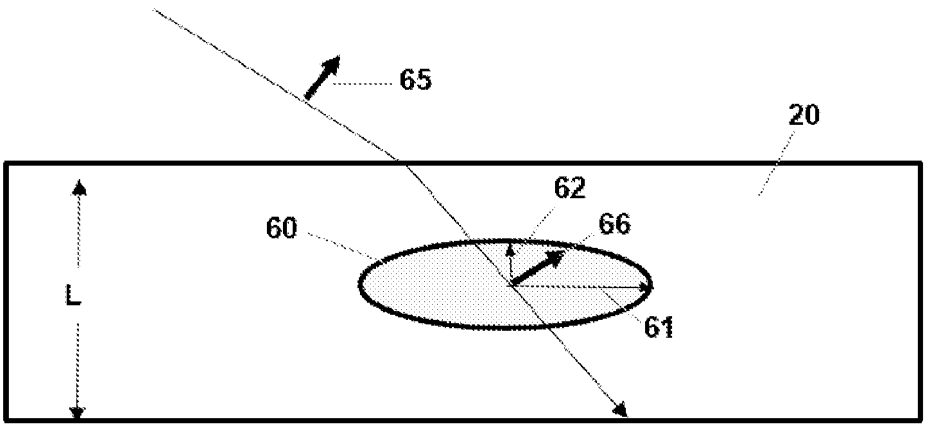


Figure 3

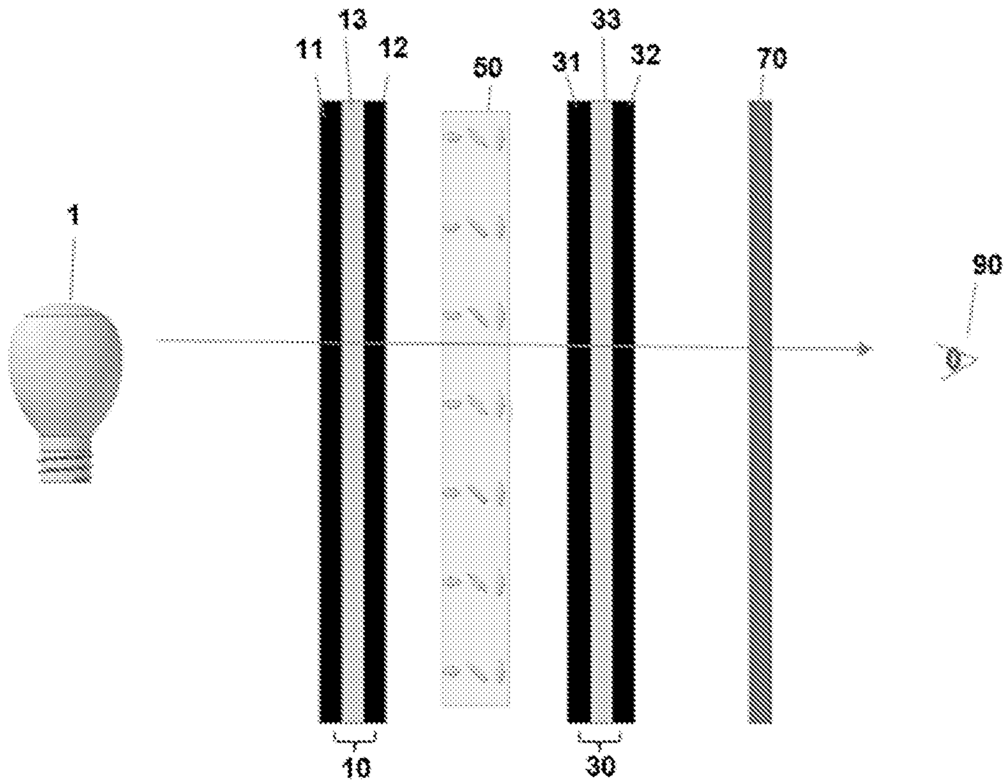


Figure 4

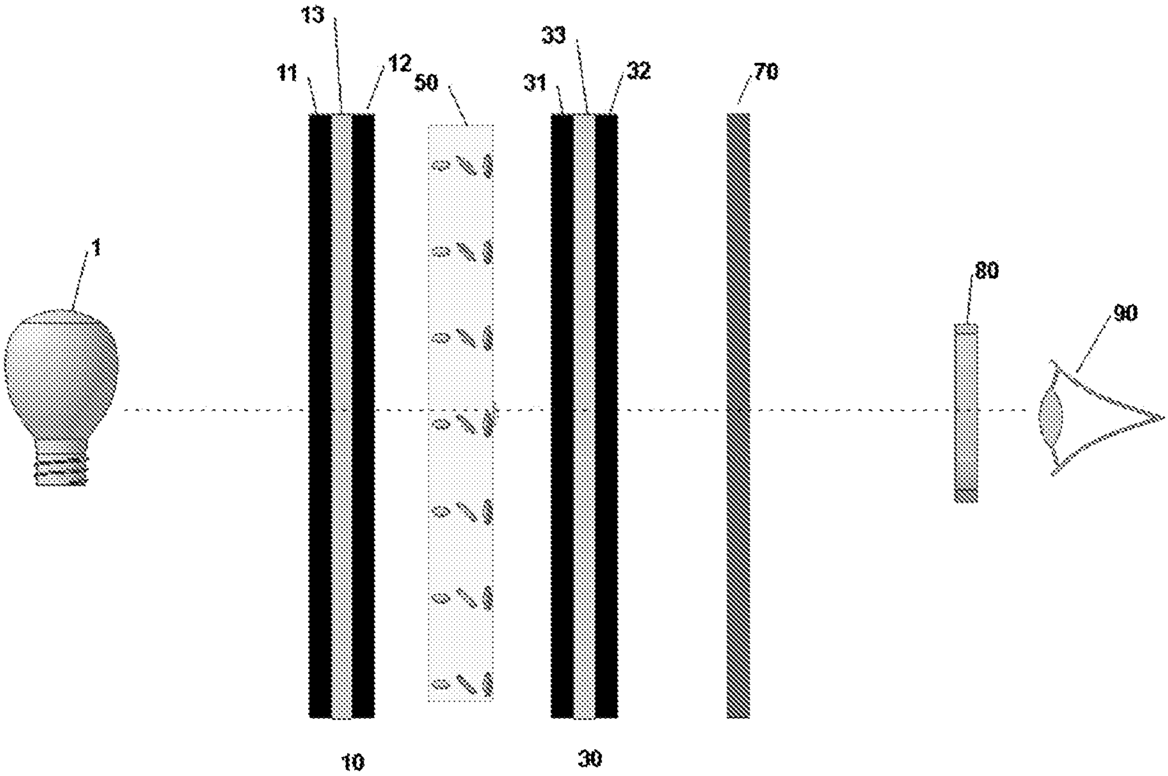


Figure 5

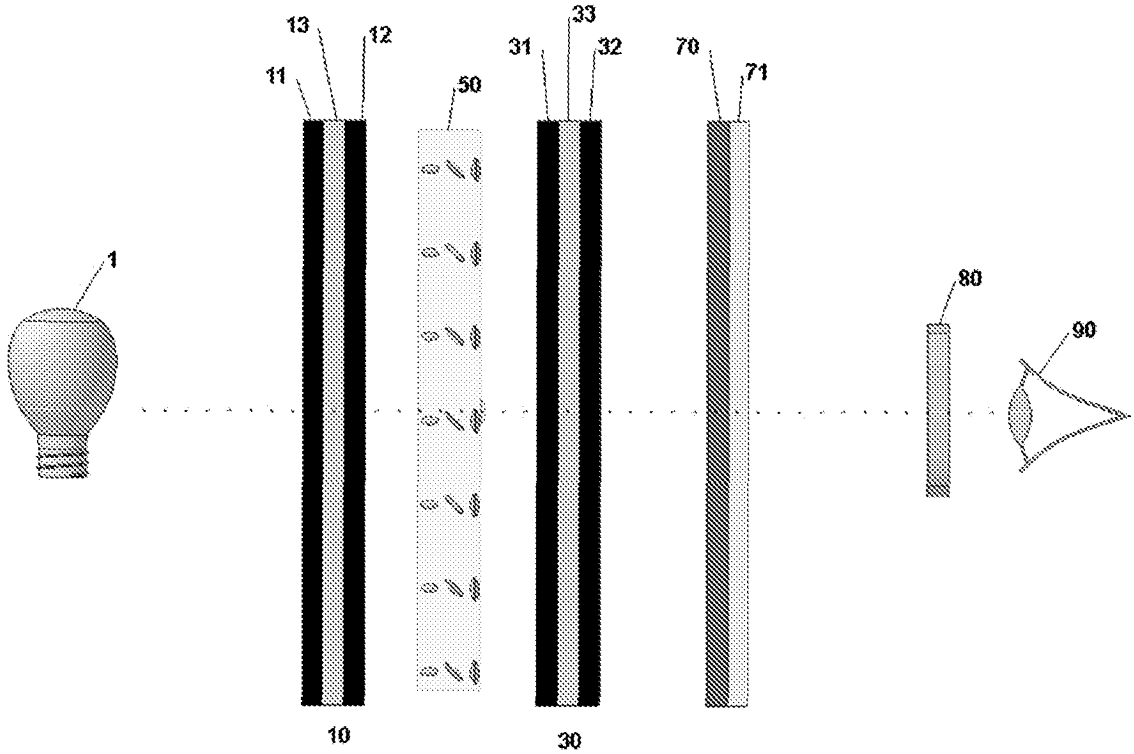


Figure 6

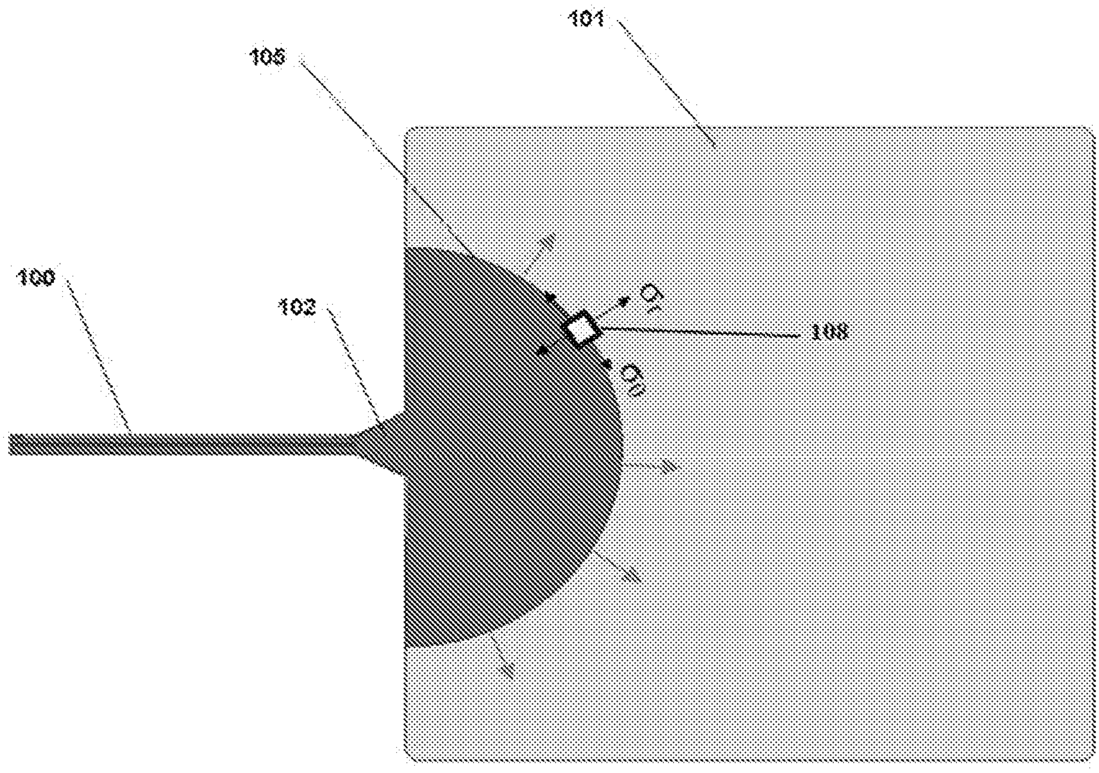


Figure 7

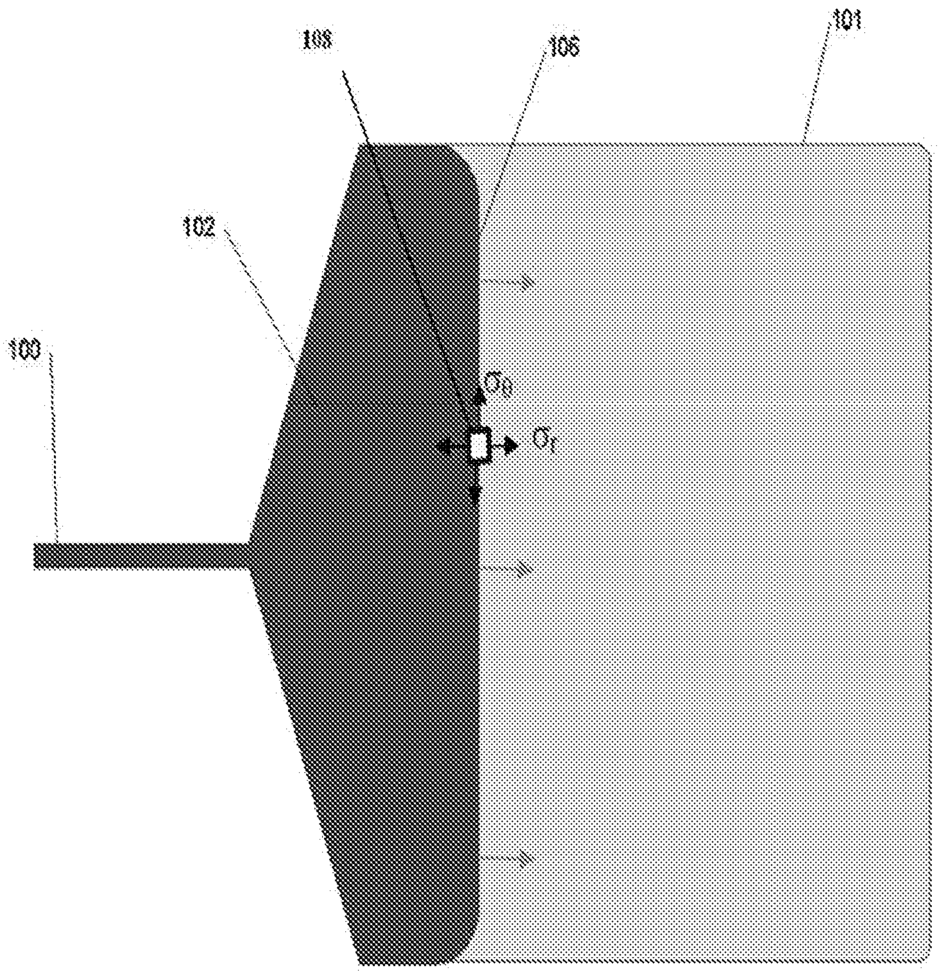


Figure 8

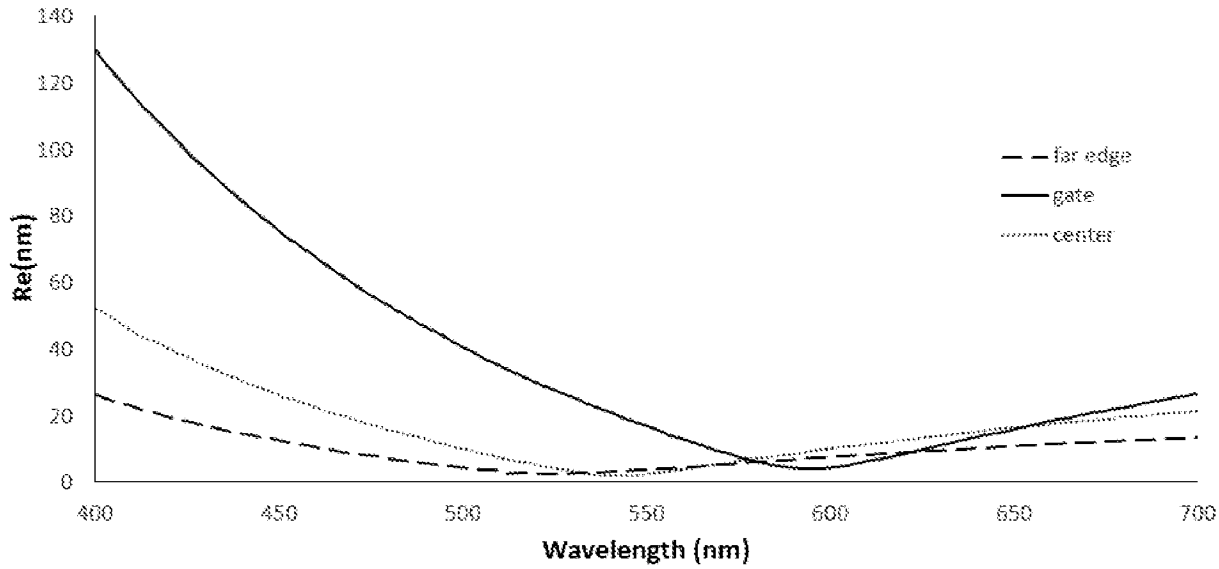
140
120
100
80
60
40
20
0
Re(nm)
400
450
500
550
600
650
700
Wavelength (nm)
far edge
gate
center

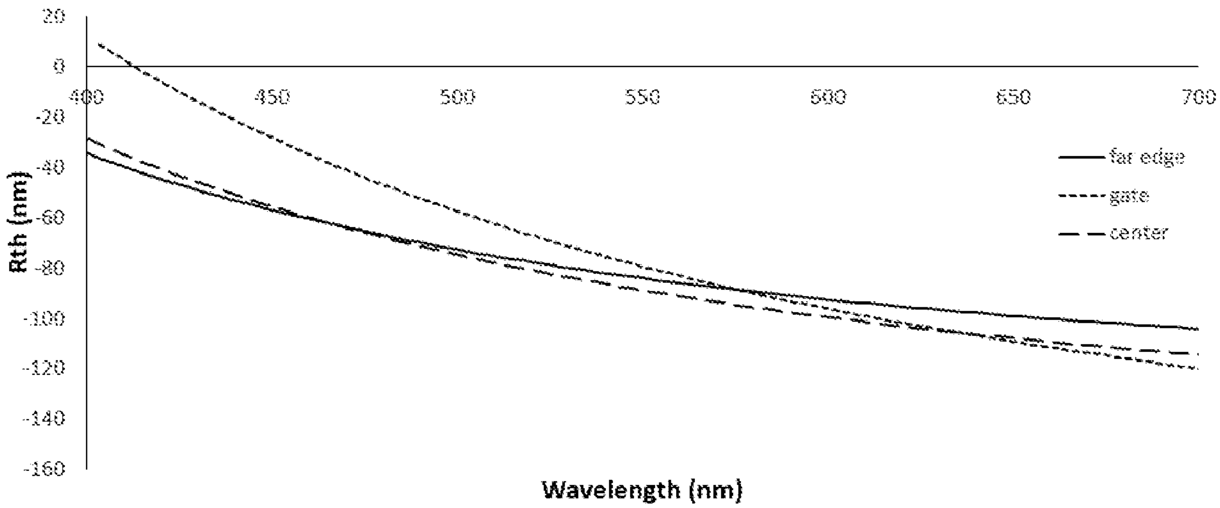
20
0
-20
-40
-60
-80
-100
-120
-140
-160
Rth (nm)
400
450
500
550
600
650
700
Wavelength (nm)
far edge
gate
center

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **WIMBERGER-FRIEDL, R.** Orientation, stress and density distributions in injection-moulded amorphous polymers determined by optical techniques. *Eindhoven: Technische Universiteit Eindhoven DOI:10.6100/IR364279*, 1991
- *Cellulose*, 2015, vol. 22, 3003-3012